(19) Europäisches Patentamt
European Patent Office
Office européen des brevets

(11) **EP 4 451 733 A1**

(12) **EUROPEAN PATENT APPLICATION**
published in accordance with Art. 153(4) EPC

(43) Date of publication:
**23.10.2024  Bulletin 2024/43**

(21) Application number: **23742885.9**

(22) Date of filing: **17.01.2023**

(51) International Patent Classification (IPC):
**H04W 24/10** (2009.01)    **H04W 36/30** (2009.01)

(52) Cooperative Patent Classification (CPC):
**H04W 24/10; H04W 36/00; H04W 48/16;**
**H04W 48/20;** H04W 36/30

(86) International application number:
**PCT/CN2023/072587**

(87) International publication number:
**WO 2023/138570 (27.07.2023 Gazette 2023/30)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **24.01.2022  CN 202210080003**

(71) Applicant: **Huawei Technologies Co., Ltd.**
**Shenzhen, Guangdong 518129 (CN)**

(72) Inventors:
• **WANG, Xiaolu**
  **Shenzhen, Guangdong 518129 (CN)**
• **LUO, Hejia**
  **Shenzhen, Guangdong 518129 (CN)**
• **WANG, Jun**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54)    **COMMUNICATION METHOD AND COMMUNICATION APPARATUS**

(57)    Embodiments of this application disclose a communication method and a communication apparatus. The method according to embodiments of this application includes: A terminal device measures a reference signal of a first cell; and the terminal device sends a measurement result corresponding to the first cell to a network device, where the measurement result corresponding to the first cell includes a first identifier of the first cell, and the first identifier uniquely identifies the first cell. This helps the network device determine, based on measurement results, specific cells whose measurement results are reported, that is, distinguish signal quality of specific cells. In addition, this avoids a problem that the network device indicates the terminal device to hand over, access, or reselect to an incorrect cell due to cell confusion caused because different cells use a same PCI. In this way, communication performance is improved.

FIG. 3

**Description**

This application claims priority to Chinese Patent Application No. 202210080003.5, filed with the China National Intellectual Property Administration on January 24, 2022 and entitled "COMMUNICATION METHOD AND COMMUNICATION APPARATUS", which is incorporated herein by reference in its entirety.

**TECHNICAL FIELD**

This application relates to the field of communication technologies, and in particular, to a communication method and a communication apparatus.

**BACKGROUND**

In a communication system, a terminal device may measure signal quality of reference signals of surrounding cells, and report a corresponding measurement result to a network device. The network device may select a corresponding cell for the terminal device based on the measurement result, so that the terminal device performs communication by using the selected cell.

How the terminal device reports the measurement result to enable the network device to select a suitable cell for the terminal device is a problem that needs to be considered.

**SUMMARY**

This application provides a communication method and a communication apparatus, to improve communication performance.

A first aspect of this application provides a communication method. The method is applied to a non-terrestrial network (non-terrestrial network, NTN) system, a quantity of cells included in the NTN system exceeds a first threshold, and the method includes the following steps:

A terminal device measures a reference signal of a first cell; and the terminal device sends a measurement result corresponding to the first cell to a network device, where the measurement result corresponding to the first cell includes a first identifier of the first cell, and the first identifier uniquely identifies the first cell.

In the foregoing technical solution, when the quantity of cells included in the NTN system exceeds the first threshold, the measurement result reported by the terminal device to the network device includes the first identifier of the first cell, and the first identifier uniquely identifies the first cell. Therefore, the network device can determine specific cells whose measurement results are reported, that is, can distinguish signal quality of specific cells without confusion. This helps the network device accurately select a suitable cell for the terminal device based on the measurement result, thereby improving communication performance. For example, the network device may select a cell with best signal quality for the terminal device based on the measurement result. This avoids a handover failure, an access failure, or a reselection failure between the network device and the terminal device due to confusion, reduces a handover delay, an access delay, or a reselection delay of the terminal device, and improves the communication performance.

In a possible implementation, the first identifier includes at least one of the following: a cell identity (Cell ID), a cell identifier (Cell Identifier), and a cell global identifier (cell global identifier, CGI) of the first cell.

In this implementation, some possible forms of the first identifier are provided. This facilitates implementation of a solution. For example, a length of the cell identity of the first cell may be 14 bits, and a maximum quantity supported by the cell identity of the first cell is 16384. Therefore, in the NTN system, the terminal device can uniquely identify the first cell by using the cell identity of the first cell. For example, a length of the cell identifier of the first cell may be 36 bits, and a maximum quantity supported by the cell identifier of the first cell is $6.87e^{10}$. Therefore, in the NTN system, the terminal device can uniquely identify the first cell by using the cell identifier of the first cell. For example, a length of the CGI of the first cell may be 60 bits, and a maximum quantity supported by the CGI of the first cell is $1.529e^{18}$ (where a quantity of cells not less than a quantity of cells represented by the cell identifier is supported). Therefore, in the NTN system, the terminal device can uniquely identify the first cell by using the CGI of the first cell.

In another possible implementation, the measurement result corresponding to the first cell further includes at least one of the following: a physical cell identifier (physical cell identifier, PCI) of the first cell and position information of the terminal device.

In this implementation, the measurement result corresponding to the first cell may further include the PCI of the first cell and/or the position information of the terminal device, so that the network device can obtain some physical layer information of the first cell by using the PCI, or selects a suitable cell for the terminal device based on the position information of the terminal device, thereby improving the communication performance.

In another possible implementation, the method further includes:

The terminal device obtains first configuration information from the network device, where the first configuration information is used to configure event-triggered measurement and reporting of the first identifier for the terminal device. That the terminal device sends a measurement result corresponding to the first cell to a network device includes: The terminal device sends the measurement result corresponding to the first cell to the network device based on the first configuration information.

In this implementation, the terminal device may receive the first configuration information from the network device, and report, based on the first configuration information, the measurement result corresponding to the first cell. In this way, the network device can accurately identify the first cell by using the measurement result corresponding to the first cell. This helps the network device to indicate the terminal device to hand over or reselect to a correct cell, thereby improving the communication performance.

In another possible implementation, the first configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the first identifier by the terminal device;
the quantity of reporting times indicates a quantity of reporting times of reporting the measurement result corresponding to the first cell;
the reporting interval is a time interval between two times of consecutively reporting the measurement result of the at least one first cell by the terminal device; and the reported content includes the first identifier.

In this implementation, some specific content included in the first configuration information is provided, to facilitate the implementation of the solution. In addition, the measurement report type may be configured in the first configuration information, so that the terminal device reports the measurement result based on the measurement report type, to report the first identifier of the first cell to the network device. In this way, the network device can distinguish the first cell, to avoid a problem that the network device indicates the terminal device to hand over to an incorrect cell due to cell confusion caused because different cells use a same PCI. Therefore, the communication performance is improved.

In another possible implementation, the reported content further includes at least one of the following: signal quality and frequency information of the first cell.

In this implementation, the network device configures, by using the first configuration information, some possible parameters reported by the terminal device, so that the network device can obtain information such as the signal quality of the first cell. Therefore, it is convenient for the network device to select the suitable cell for the terminal device to perform handover or reselection.

In another possible implementation, the method further includes:

The terminal device receives first information from the network device, where the first information includes a first identifier of a target cell, the first information indicates the terminal device to hand over to the target cell, and the target cell belongs to the first cell; and the terminal device hands over from a serving cell to the target cell based on the first information.

In this implementation, the technical solution in this application may be applied to a cell handover scenario. The network device can accurately distinguish the first cell by using the measurement result corresponding to the first cell, and select the target cell from the first cell. Then, the network device may indicate, by using the first identifier of the target cell, the terminal device to hand over to the target cell, to implement smooth cell handover. This improves the communication performance, reduces the handover delay of the terminal device, and avoids a problem of a cell handover failure caused due to cell confusion caused because different cells use a same PCI.

In another possible implementation, the method further includes:

The terminal device receives second information from the network device, where the second information includes a first identifier of at least one conditional handover (conditional handover, CHO) candidate cell and a CHO handover condition corresponding to each of the at least one CHO candidate cell, a first identifier corresponding to each CHO candidate cell uniquely identifies the CHO candidate cell, and the at least one CHO candidate cell belongs to the first cell; the terminal device determines a target CHO candidate cell from the at least one CHO candidate cell based on the second information; and the terminal device accesses the target CHO candidate cell.

In this implementation, the technical solution in this application may be applied to a conditional handover scenario. The terminal device may receive the second information from the network device. The second information includes the first identifier of the at least one CHO candidate cell and the CHO handover condition corresponding to each of the at least one CHO candidate cell. The network device and the terminal device may distinguish between these cells by using the first identifier of the CHO candidate cell. The terminal device selects the target CHO candidate cell from the at least one CHO candidate cell, and hands over to the target CHO candidate cell. In this way, the terminal device completes cell handover. This improves the communication performance, reduces the handover delay of the terminal device, and avoids a problem of a cell handover failure caused due to cell confusion caused because different cells use a same PCI.

In another possible implementation, the method further includes:

The terminal device receives third information from the network device, where the third information includes the first identifier of the target cell, the third information indicates the terminal device to reselect to the target cell, and the target cell belongs to the at least one first cell; and the terminal device reselects from the serving cell to the target cell based on the third information.

In this implementation, the technical solution in this application may be applied to a cell reselection scenario. The terminal device receives the third information from the network device. The third information includes the first identifier of the target cell, and the terminal device reselects from the serving cell to the target cell based on the third information. In this way, the terminal device completes cell reselection. This improves communication performance, reduces a reselection delay of the terminal device, and avoids a problem of a cell reselection failure caused due to cell confusion caused because different cells use a same PCI.

In another possible implementation, the measurement result corresponding to the first cell includes signal quality and frequency information of the first cell.

In this implementation, content included in the measurement result corresponding to the first cell is provided, so that the network device can obtain information such as the signal quality of the first cell.

A second aspect of this application provides a communication method. The method is applied to an NTN system, a quantity of cells included in the NTN system exceeds a first threshold, and the method includes the following steps:

A network device receives a measurement result corresponding to a first cell from a terminal device, where the measurement result corresponding to the first cell includes a first identifier of the first cell, and the first identifier uniquely identifies the first cell; and the network device determines signal quality of the first cell based on the measurement result corresponding to the first cell.

In the foregoing technical solution, in the NTN system, the quantity of cells included in the NTN system exceeds the first threshold. The terminal device measures a reference signal of the first cell. Then, the terminal device sends the measurement result corresponding to the first cell to the network device, where the measurement result corresponding to the first cell includes the first identifier of the first cell, and the first identifier uniquely identifies the first cell. It can be learned that, when the quantity of cells included in the NTN system exceeds the first threshold, the measurement result reported by the terminal device to the network device includes the first identifier of the first cell, and the first identifier uniquely identifies the first cell. Therefore, the network device can determine specific cells whose measurement results are reported, that is, can distinguish signal quality of specific cells, to avoid cell confusion or a cell conflict caused by a same PCI. This helps the network device accurately select a suitable cell for the terminal device based on the measurement result, thereby improving communication performance. For example, the network device may select a cell with best signal quality for the terminal device based on the measurement result. This avoids a handover failure, an access failure, or a reselection failure between the network device and the terminal device due to confusion, reduces a handover delay, an access delay, or a reselection delay of the terminal device, and improves the communication performance.

In a possible implementation, the first identifier includes at least one of the following: a cell identity (Cell ID), a cell identifier (Cell Identifier), and a CGI of the first cell.

In this implementation, some possible forms of the first identifier are provided. This facilitates implementation of a solution. For example, a length of the cell identity of the first cell may be 14 bits, and a maximum quantity supported by the cell identity of the first cell is 16384. Therefore, in the NTN system, the terminal device can uniquely identify the first cell by using the cell identity of the first cell. For example, a length of the cell identifier of the first cell may be 36 bits, and a maximum quantity supported by the cell identifier of the first cell is $6.87e^{10}$. Therefore, in the NTN system, the terminal device can uniquely identify the first cell by using the cell identifier of the first cell. For example, a length of the CGI of the first cell may be 60 bits, and a maximum quantity supported by the CGI of the first cell is $1.529e^{18}$ (where a quantity of cells not less than a quantity of cells represented by the cell identifier is supported). Therefore, in the NTN system, the terminal device can uniquely identify the first cell by using the CGI of the first cell.

In another possible implementation, the measurement result corresponding to the first cell further includes at least one of the following: a PCI of the first cell and position information of the terminal device.

In this implementation, the measurement result corresponding to the first cell may further include the PCI of the first cell and/or the position information of the terminal device, so that the network device can obtain some physical layer information of the first cell by using the PCI, or selects a suitable cell for the terminal device based on the position information of the terminal device, thereby improving the communication performance.

In another possible implementation, the method further includes:

The network device sends first configuration information to the terminal device, where the first configuration information is used to configure event-triggered measurement and reporting of the first identifier for the terminal device.

In this implementation, the network device sends the first configuration information to the terminal device, so that the terminal device reports, based on the first configuration information, the measurement result corresponding to the first cell. In this way, the network device can accurately identify the first cell by using the measurement result corresponding to the first cell. This helps the network device to indicate the terminal device to hand over or reselect to a correct cell, thereby improving the communication performance.

In another possible implementation, the first configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the first identifier by the terminal device; the quantity of reporting times indicates a quantity of reporting times of reporting the measurement result of the first cell; the reporting interval is a time interval between two times of consecutively reporting the measurement result of the first cell by the terminal device; and the reported content includes the first identifier.

In this implementation, some specific content included in the first configuration information is provided, to facilitate the implementation of the solution. In addition, the measurement report type may be configured in the first configuration information, so that the terminal device reports the measurement result based on the measurement report type, to report the first identifier of the first cell to the network device. In this way, the network device can distinguish the first cell, to avoid a problem that the network device indicates the terminal device to hand over to an incorrect cell due to cell confusion caused because different cells use a same PCI. Therefore, the communication performance is improved.

In another possible implementation, that the network device sends first configuration information to the terminal device includes:

If at least two neighboring cells with a same PCI exist in neighboring cells of a serving cell, the network device sends the first configuration information to the terminal device.

In this implementation, if the neighboring cells with the same PCI exist around the serving cell, the network device may configure the first configuration information for the terminal device. Therefore, when reporting the measurement result of the first cell, the terminal device includes the first identifier of the first cell in the measurement result. This helps the network device identify the first cell, so that the network device may indicate the terminal device to hand over or reselect to the terminal device.

In another possible implementation, the reported content further includes at least one of the following: signal quality and frequency information of the first cell.

In this implementation, the network device configures, by using the first configuration information, some possible parameters reported by the terminal device, so that the network device can obtain information such as the signal quality of the first cell. Therefore, it is convenient for the network device to select the suitable cell for the terminal device to perform handover or reselection.

In another possible implementation, the method further includes:

The network device determines a target cell from the first cell based on the signal quality of the first cell; the network device sends first information to the terminal device, where the first information includes a first identifier of the target cell, and the first information indicates the terminal device to hand over to the target cell.

In this implementation, the technical solution in this application may be applied to a cell handover scenario. The network device can accurately distinguish the first cell by using the measurement result corresponding to the first cell, and select the target cell from the first cell. Then, the network device may indicate, by using the first identifier of the target cell, the terminal device to hand over to the target cell, to implement smooth cell handover. This improves the communication performance, reduces the handover delay of the terminal device, and avoids a problem of a cell handover failure caused due to cell confusion caused because different cells use a same PCI.

In another possible implementation, the method further includes:

The network device determines at least one CHO candidate cell from the first cell based on the signal quality of the first cell; and the network device sends second information to the terminal device, where the second information includes a first identifier of the at least one CHO candidate cell and a CHO handover condition corresponding to each of the at least one CHO candidate cell, and a first identifier corresponding to each CHO candidate cell uniquely identifies the CHO candidate cell.

In this implementation, the technical solution in this application may be applied to a conditional handover scenario. The network device sends the second information to the terminal device. The second information includes the first identifier of the at least one CHO candidate cell and the CHO handover condition corresponding to each of the at least one CHO candidate cell. The network device and the terminal device may distinguish between these cells by using the first identifier of the CHO candidate cell. The terminal device selects the target CHO candidate cell from the at least one CHO candidate cell, and hands over to the target CHO candidate cell. In this way, the terminal device completes cell handover. This improves the communication performance, reduces the handover delay of the terminal device, and avoids a problem of a cell handover failure caused due to cell confusion caused because different cells use a same PCI.

In another possible implementation, the method further includes:

The network device determines a target cell from the at least one first cell based on the signal quality of the at least one first cell; the network device sends third information to the terminal device, where the third information includes a first identifier of the target cell, and the third information indicates the terminal device to reselect to the target cell.

In this implementation, the technical solution in this application may be applied to a cell reselection scenario. The network device sends the third information to the terminal device. The third information includes the first identifier of the target cell, and the terminal device reselects from the serving cell to the target cell based on the third information. In this way, the terminal device completes cell reselection. This improves communication performance, reduces a reselection delay of the terminal device, and avoids a problem of a cell reselection failure caused due to cell confusion caused because different cells use a same PCI.

In another possible implementation, the measurement result corresponding to the first cell includes signal quality and frequency information of the first cell.

In this implementation, content included in the measurement result corresponding to the first cell is provided, so that the network device can obtain information such as the signal quality of the first cell.

A third aspect of this application provides a communication method. The method is applied to an NTN system, a quantity of cells included in the NTN system exceeds a first threshold, and the method includes the following steps:

A terminal device measures a reference signal of a first cell; and the terminal device sends a measurement result corresponding to the first cell to a network device, where the measurement result corresponding to the first cell includes a PCI of the first cell and position information of the terminal device.

In the foregoing technical solution, in the NTN system, the quantity of cells included in the NTN system exceeds the first threshold. The terminal device measures the reference signal of the first cell. Then, the terminal device sends the measurement result corresponding to the first cell to the network device, where the measurement result corresponding to the first cell includes the PCI of the first cell and the position information of the terminal device. It can be learned that, when the quantity of cells included in the NTN system exceeds the first threshold, the measurement result reported by the terminal device to the network device includes the PCI of the first cell and the position information of the terminal device. This helps the network device accurately identify specific cells whose measurement results are reported, that is, distinguish signal quality of specific cells, to avoid cell confusion or a cell conflict caused by a same PCI. This helps the network device accurately select a suitable cell for the terminal device based on the measurement result, thereby improving communication performance. For example, the network device may select a cell with best signal quality for the terminal device based on the measurement result. This avoids a handover failure, an access failure, or a reselection failure between the network device and the terminal device due to confusion, reduces a handover delay, an access delay, or a reselection delay of the terminal device, and improves the communication performance.

In a possible implementation, the method further includes:

The terminal device receives second configuration information from the network device, where the second configuration information is used to configure event-triggered measurement and reporting of the position information of the terminal device for the terminal device. That the terminal device sends a measurement result corresponding to the first cell to a network device includes: The terminal device sends the measurement result corresponding to the first cell to the network device based on the second configuration information.

In this implementation, the terminal device may receive the second configuration information from the network device, and report, based on the second configuration information, the measurement result corresponding to the first cell. In this way, the network device can accurately identify the first cell by using the measurement result corresponding to the first cell. This helps the network device to indicate the terminal device to hand over or reselect to a correct cell, thereby improving the communication performance.

In another possible implementation, the second configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the position information of the terminal device by the terminal device;
the quantity of reporting times indicates a quantity of reporting times of reporting the measurement result corresponding to the first cell;
the reporting interval is a time interval between two times of consecutively reporting the measurement result of the at least one first cell by the terminal device; and the reported content includes the position information of the terminal device and the PCI of the first cell.

In this implementation, some specific content included in the second configuration information is provided, to facilitate implementation of the solution. In addition, the measurement report type may be configured in the second configuration information, so that the terminal device reports the measurement result based on the measurement report type, to report the PCI of the first cell and the position information of the terminal device to the network device. In this way, the network device can distinguish the first cell, to avoid a problem that the network device indicates the terminal device to hand over to an incorrect cell due to cell confusion caused because different cells use a same PCI. Therefore, the communication performance is improved.

In another possible implementation, the reported content further includes at least one of the following: signal quality and frequency information of the first cell.

In this implementation, the network device configures, by using the second configuration information, some possible parameters reported by the terminal device, so that the network device can obtain information such as the signal quality of the first cell. Therefore, it is convenient for the network device to select the suitable cell for the terminal device to perform handover or reselection.

In another possible implementation, the measurement result corresponding to the first cell includes signal quality and frequency information of the first cell.

In this implementation, content included in the measurement result corresponding to the first cell is provided, so that the network device can obtain information such as the signal quality of the first cell.

A fourth aspect of this application provides a communication method, where the method is applied to an NTN system, a quantity of cells included in the NTN system exceeds a first threshold, and the method includes the following steps:

A network device receives a measurement result corresponding to a first cell from a terminal device, where the measurement result corresponding to the first cell includes a PCI of the first cell and position information of the terminal device; and the network device determines signal quality of the first cell based on the measurement result corresponding to the first cell.

In the foregoing technical solution, in the NTN system, the quantity of cells included in the NTN system exceeds the first threshold. The network device receives the measurement result corresponding to the first cell from the terminal device, where the measurement result corresponding to the first cell includes the PCI of the first cell and the position information of the terminal device; and the network device determines the signal quality of the first cell based on the measurement result corresponding to the first cell. It can be learned that, when the quantity of cells included in the NTN system exceeds the first threshold, the measurement result reported by the terminal device to the network device includes the PCI of the first cell and the position information of the terminal device. This helps the network device accurately identify specific cells whose measurement results are reported, that is, distinguish signal quality of specific cells, to avoid cell confusion or a cell conflict caused by a same PCI. This helps the network device accurately select a suitable cell for the terminal device based on the measurement result, thereby improving communication performance. For example, the network device may select a cell with best signal quality for the terminal device based on the measurement result. This avoids a handover failure, an access failure, or a reselection failure between the network device and the terminal device due to confusion, reduces a handover delay, an access delay, or a reselection delay of the terminal device, and improves the communication performance.

In a possible implementation, the method further includes:

The network device sends second configuration information to the terminal device, where the second configuration information is used to configure event-triggered measurement and reporting of the position information of the terminal device for the terminal device.

In this implementation, the network device sends the second configuration information to the terminal device, so that the terminal device reports, based on the second configuration information, the measurement result corresponding to the first cell to the network device. In this way, the network device can accurately identify the first cell by using the measurement result corresponding to the first cell. This helps the network device to indicate the terminal device to hand over or reselect to a correct cell, thereby improving the communication performance.

In another possible implementation, the second configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the position information of the terminal device by the terminal device;
the quantity of reporting times indicates a quantity of reporting times of reporting the measurement result corresponding to the first cell;
the reporting interval is a time interval between two times of consecutively reporting the measurement result of the at least one first cell by the terminal device; and the reported content includes the position information of the terminal device and the PCI of the first cell.

In this implementation, some specific content included in the second configuration information is provided, to facilitate implementation of the solution. In addition, the measurement report type may be configured in the second configuration information, so that the terminal device reports the measurement result based on the measurement report type, to report the PCI of the first cell and the position information of the terminal device to the network device. In this way, the network device can distinguish the first cell, to avoid a problem that the network device indicates the terminal device to hand over to an incorrect cell due to cell confusion caused because different cells use a same PCI. Therefore, the communication performance is improved.

In another possible implementation, the reported content further includes at least one of the following: the signal quality and frequency information of the first cell.

In this implementation, the network device configures, by using the second configuration information, some possible parameters reported by the terminal device, so that the network device can obtain information such as the signal quality of the first cell. Therefore, it is convenient for the network device to select the suitable cell for the terminal device to perform handover or reselection.

In another possible implementation, the measurement result corresponding to the first cell includes signal quality and frequency information of the first cell.

In this implementation, content included in the measurement result corresponding to the first cell is provided, so that the network device can obtain information such as the signal quality of the first cell.

A fifth aspect of this application provides a communication apparatus. The communication apparatus is used in an NTN system, a quantity of cells included in the NTN system exceeds a first threshold, and the communication apparatus includes:

> a processing module, configured to measure a reference signal of a first cell; and
> a transceiver module, configured to send a measurement result corresponding to the first cell to a network device, where the measurement result corresponding to the first cell includes a first identifier of the first cell, and the first identifier uniquely identifies the first cell.

In a possible implementation, the first identifier includes at least one of the following: a cell identity (Cell ID), a cell identifier (Cell Identifier), and a CGI of the first cell.

In another possible implementation, the measurement result corresponding to the first cell further includes at least one of the following: a PCI of the first cell and position information of the communication apparatus.

In another possible implementation, the transceiver module is further configured to:

> obtain first configuration information from the network device, where the first configuration information is used to configure event-triggered measurement and reporting of the first identifier for the communication apparatus; and
> the transceiver module is specifically configured to:
> send the measurement result corresponding to the first cell to the network device based on the first configuration information.

In another possible implementation, the first configuration information includes at least one of the following: a measurement event, a measurement report type of the measurement event, and an event trigger condition of the measurement event, a quantity of reporting times, a reporting interval, and reported content;

> the measurement report type includes the event-triggered measurement and the reporting of the first identifier by the communication apparatus;
> the quantity of reporting times indicates a quantity of reporting times of reporting the measurement result corresponding to the first cell;
> the reporting interval is a time interval between two times of consecutively reporting the measurement result of the at least one first cell by the communication apparatus; and the reported content includes the first identifier.

In another possible implementation, the reported content further includes at least one of the following: signal quality and frequency information of the first cell.

In another possible implementation, the transceiver module is further configured to:

> receive first information from the network device, where the first information includes a first identifier of a target cell, the first information indicates the communication apparatus to hand over to the target cell, and the target cell belongs to the first cell; and
> the processing module is further configured to:
> hand over from a serving cell to the target cell based on the first information.

In another possible implementation, the transceiver module is further configured to:

> receive second information from the network device, where the second information includes a first identifier of at least one CHO candidate cell and a CHO handover condition corresponding to each of the at least one CHO candidate cell, a first identifier corresponding to each CHO candidate cell uniquely identifies the CHO candidate cell, and the at least one CHO candidate cell belongs to the first cell; and
the processing module is further configured to:

determine a target CHO candidate cell from the at least one CHO candidate cell based on the second information; and
access the target CHO candidate cell.

In another possible implementation, the transceiver module is further configured to:

receive third information from the network device, where the third information includes the first identifier of the target cell, the third information indicates the communication apparatus to reselect to the target cell, and the target cell belongs to the at least one first cell; and
the processing module is further configured to:
reselect from the serving cell to the target cell based on the third information.

In another possible implementation, the measurement result corresponding to the first cell includes signal quality and frequency information of the first cell.
A sixth aspect of this application provides a communication apparatus. The communication apparatus is used in an NTN system, a quantity of cells included in the NTN system exceeds a first threshold, and the communication apparatus includes:

a transceiver module, configured to receive a measurement result corresponding to a first cell from a terminal device, where the measurement result corresponding to the first cell includes a first identifier of the first cell, and the first identifier uniquely identifies the first cell;
and
a processing module, configured to determine signal quality of the first cell based on the measurement result corresponding to the first cell.

In a possible implementation, the first identifier includes at least one of the following: a cell identity (Cell ID), a cell identifier (Cell Identifier), and a CGI of the first cell.
In another possible implementation, the measurement result corresponding to the first cell further includes at least one of the following: a PCI of the first cell and position information of the terminal device.
In another possible implementation, the transceiver module is further configured to:
send first configuration information to the terminal device, where the first configuration information is used to configure event-triggered measurement and reporting of the first identifier for the terminal device.
In another possible implementation, the first configuration information includes at least one of the following: a measurement event, a measurement report type of the measurement event, and an event trigger condition of the measurement event, a quantity of reporting times, a reporting interval, and reported content;
the measurement report type includes the event-triggered measurement and the reporting of the first identifier by the terminal device; the quantity of reporting times indicates a quantity of reporting times of reporting the measurement result of the first cell; the reporting interval is a time interval between two times of consecutively reporting the measurement result of the first cell by the terminal device; and the reported content includes the first identifier.
In another possible implementation, the transceiver module is specifically configured to:
if at least two neighboring cells with a same PCI exist in neighboring cells of a serving cell, send the first configuration information to the terminal device.
In another possible implementation, the reported content further includes at least one of the following: the signal quality and frequency information of the first cell.
In another possible implementation, the processing module is further configured to:

determine a target cell from the first cell based on the signal quality of the first cell;
and
the transceiver module is further configured to:
send first information to the terminal device, where the first information includes a first identifier of the target cell, and the first information indicates the terminal device to hand over to the target cell.

In another possible implementation, the processing module is further configured to:

determine at least one CHO candidate cell from the first cell based on the signal quality of the first cell; and
the transceiver module is further configured to:
send second information to the terminal device, where the second information includes a first identifier of the at least one CHO candidate cell and a CHO handover condition corresponding to each of the at least one CHO candidate cell, and a first identifier corresponding to each CHO candidate cell uniquely identifies the CHO candidate cell.

In another possible implementation, the processing module is further configured to:

determine the target cell from the at least one first cell based on the signal quality of the at least one first cell; and
the transceiver module is further configured to:
send third information to the terminal device, where the third information includes the first identifier of the target cell, and the third information indicates the terminal device to reselect to the target cell.

In another possible implementation, the measurement result corresponding to the first cell includes signal quality and frequency information of the first cell.
A seventh aspect of this application provides a communication apparatus. The communication apparatus is used in an NTN system, a quantity of cells included in the NTN system exceeds a first threshold, and the communication apparatus includes:

a processing module, configured to measure a reference signal of a first cell; and
a transceiver module, configured to send a measurement result corresponding to the first cell to a network device, where the measurement result corresponding to the first cell includes a PCI the first cell and position information of the communication apparatus.

In a possible implementation, the transceiver module is further configured to:

receive second configuration information from the network device, where the second configuration information is used to configure event-triggered measurement and reporting of the position information of the communication apparatus for the communication apparatus; and
the transceiver module is specifically configured to:
send the measurement result corresponding to the first cell to the network device based on the second configuration information.

In another possible implementation, the second configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the position information of the communication apparatus by the communication apparatus;
the quantity of reporting times indicates a quantity of reporting times of reporting the measurement result corresponding to the first cell;
the reporting interval is a time interval between two times of consecutively reporting the measurement result of the at least one first cell by the communication apparatus; and the reported content includes the position information of the communication apparatus and the PCI of the first cell.

In another possible implementation, the reported content further includes at least one of the following: signal quality and frequency information of the first cell.
In another possible implementation, the measurement result corresponding to the first cell includes signal quality and frequency information of the first cell.
An eighth aspect of this application provides a communication apparatus. The communication apparatus is used in an NTN system, a quantity of cells included in the NTN system exceeds a first threshold, and the communication apparatus includes:

a transceiver module, configured to receive a measurement result corresponding to a first cell from a terminal device, where the measurement result corresponding to the first cell includes a PCI of the first cell and position information of the terminal device; and
a processing module, configured to determine signal quality of the first cell based on the measurement result corresponding to the first cell.

In a possible implementation, the transceiver module is further configured to:
send second configuration information to the terminal device, where the second configuration information is used to configure event-triggered measurement and reporting of the position information of the terminal device for the terminal device.

In another possible implementation, the second configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the position information of the terminal device by the terminal device;
the quantity of reporting times indicates a quantity of reporting times of reporting the measurement result corresponding to the first cell;
the reporting interval is a time interval between two times of consecutively reporting the measurement result of the at least one first cell by the terminal device; and the reported content includes the position information of the terminal device and the PCI of the first cell.

In another possible implementation, the reported content further includes at least one of the following: the signal quality and frequency information of the first cell.

In another possible implementation, the measurement result corresponding to the first cell includes signal quality and frequency information of the first cell.

A ninth aspect of embodiments of this application provides a communication apparatus. The communication apparatus includes a processor and a memory. The memory stores a computer program; and the processor is configured to invoke and run the computer program stored in the memory, to enable the processor to implement any implementation of any one of the first aspect to the fourth aspect.

Optionally, the communication apparatus further includes a transceiver; and the processor is further configured to control the transceiver to receive and transmit a signal.

A tenth aspect of this application provides a communication apparatus. The communication apparatus includes a processor. The processor is configured to invoke a computer program or computer instructions in a memory, to enable the processor to implement any implementation of any one of the first aspect to the fourth aspect.

Optionally, the communication apparatus further includes a transceiver, and the processor is configured to control the transceiver to receive and transmit a signal.

An eleventh aspect of this application provides a communication apparatus. The communication apparatus includes a processor, and the processor is configured to perform any implementation of any one of the first aspect to the fourth aspect.

A twelfth aspect of embodiments of this application provides a communication apparatus. The communication apparatus includes a logic circuit and an input/output interface. The logic circuit is configured to perform the processing operations in any implementation of the first aspect or the third aspect, and the input/output interface is configured to perform the sending and receiving operations in any implementation of the first aspect or the third aspect.

A thirteenth aspect of embodiments of this application provides a communication apparatus. The communication apparatus includes a logic circuit and an input/output interface. The logic circuit is configured to perform the processing operations in any implementation of the second aspect or the fourth aspect, and the input/output interface is configured to perform the sending and receiving operations in any implementation of the second aspect or the fourth aspect.

A fourteenth aspect of embodiments of this application provides a computer program product including instructions. When the computer program product runs on a computer, the computer is enabled to perform any implementation of any one of the first aspect to the fourth aspect.

A fifteenth aspect of embodiments of this application provides a computer-readable storage medium, including computer instructions. When the computer instructions are run on a computer, the computer is enabled to perform any implementation of any one of the first aspect to the fourth aspect.

A sixteenth aspect of embodiments of this application provides a chip apparatus, including a processor, configured to: be connected to a memory, and invoke a program stored in the memory, to enable the processor to perform any implementation of any one of the first aspect to the fourth aspect.

A seventeenth aspect of embodiments of this application provides a communication system. The communication system includes the communication apparatus in the fifth aspect and the communication apparatus in the sixth aspect; or the communication system includes the communication apparatus in the seventh aspect and the communication apparatus in the eighth aspect.

It can be learned from the foregoing technical solutions that embodiments of this application have the following advantages.

It can be learned from the foregoing technical solutions that, in a non-terrestrial network NTN system, a quantity of cells included in the NTN system exceeds a first threshold. A terminal device measures a reference signal of a first cell. Then, the terminal device sends a measurement result corresponding to the first cell to a network device, where the measurement result corresponding to the first cell includes a first identifier of the first cell, and the first identifier uniquely identifies the first cell. It can be learned that, when the quantity of cells included in the NTN system exceeds the first threshold, the measurement result reported by the terminal device to the network device includes the first identifier of the first cell, and the first identifier uniquely identifies the first cell. Therefore, the network device can determine specific cells whose measurement results are reported, that is, can distinguish signal quality of specific cells without confusion. This helps the network device accurately select a suitable cell for the terminal device based on the measurement result, thereby improving communication performance. For example, the network device may select a cell with best signal quality for the terminal device based on the measurement result. This avoids a handover failure, an access failure, or a reselection failure between the network device and the terminal device due to confusion, reduces a handover delay, an access delay, or a reselection delay of the terminal device, and improves the communication performance.

## BRIEF DESCRIPTION OF DRAWINGS

FIG. 1A is a diagram of a communication system according to an embodiment of this application;

FIG. 1B is another diagram of a communication system according to an embodiment of this application;

FIG. 2A is a diagram of a confusion scenario of two cells with a same PCI according to an embodiment of this application;

FIG. 2B is a diagram of a conflict scenario of two cells with a same PCI according to an embodiment of this application;

FIG. 3 is a diagram of an embodiment of a communication method according to an embodiment of this application;

FIG. 4 is a diagram of another embodiment of a communication method according to an embodiment of this application;

FIG. 5 is a diagram of another embodiment of a communication method according to an embodiment of this application;

FIG. 6 is a diagram of another embodiment of a communication method according to an embodiment of this application;

FIG. 7 is a diagram of another embodiment of a communication method according to an embodiment of this application;

FIG. 8 is a diagram of a structure of a communication apparatus according to an embodiment of this application;

FIG. 9 is a diagram of another structure of a communication apparatus according to an embodiment of this application;

FIG. 10 is a diagram of another structure of a communication apparatus according to an embodiment of this application;

FIG. 11 is a diagram of another structure of a communication apparatus according to an embodiment of this application;

FIG. 12 is a diagram of a structure of a terminal device according to an embodiment of this application; and

FIG. 13 is a diagram of another structure of a communication apparatus according to an embodiment of this application.

## DESCRIPTION OF EMBODIMENTS

Embodiments of this application provide a communication method and a communication apparatus, to improve communication performance.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variations thereof all mean "including, but not limited to", unless otherwise specifically emphasized in another manner.

In descriptions of this application, unless otherwise specified, "/" means "or", for example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of means two or more. "At least one of the following items (pieces)" or a similar expression thereof means any combination of these items, including any combination of singular items (pieces) or plural items (pieces). For example, at least one of a, b, or c may represent a, b, c, a and b, a and c, b and c, or a, b, and c, where a, b, and c each may be singular or plural.

The technical solutions of this application may be applied to a non-terrestrial network (non-terrestrial network, NTN) system. It is clear that this application is also applicable to another system with a similar problem. This is not specifically limited in this application.

The non-terrestrial network system may include a satellite communication system and a high-altitude platform station (high altitude platform station, HAPS) communication system, for example, an integrated communication and navigation (integrated communication and navigation, IcaN) system, a global navigation satellite system (global navigation satellite system, GNSS), and an ultra-dense low-earth orbit satellite communication system. The satellite communication system can be integrated with a conventional mobile communication system.

A communication system to which this application is applicable includes a terminal device and a network device, and communication transmission may be performed between the terminal device and the network device.

The terminal device may be a device that provides voice or data connectivity for a user. The terminal device is also referred to as user equipment (user equipment, UE), or may be referred to as a mobile station (mobile station), a subscriber unit (subscriber unit), a station (station), a terminal equipment (terminal equipment, TE), or the like. The terminal device may be a cellular phone (phone), a personal digital assistant (personal digital assistant, PDA), a wireless modem (modem), a handheld (handheld) device, a laptop computer (laptop computer), a cordless phone (cordless phone), a wireless local loop (wireless local loop, WLL) station, a tablet computer (pad), a vehicle-mounted device, an entire vehicle module, a vehicle, a wearable device, a computing device, an aircraft, an uncrewed aerial vehicle, or the like. With the development of wireless communication technologies, a device that can access a communication system, communicate with a network side of the communication system, or communicate with another object by using the communication system may be the terminal device in embodiments of this application, for example, a terminal device and a vehicle in intelligent transportation.

The network device supports access of the terminal device and provides functions such as a communication service for the terminal device. For example, the network device may be a ground device such as an evolved NodeB (evolved nodeB, eNB) in a communication system of a 4G access technology, a next generation NodeB (next generation nodeB, gNB) in a communication system of a 5G access technology, a transmission reception point (transmission reception point, TRP), a relay node (relay node), or an access point (access point, AP). Alternatively, the network device may be a non-terrestrial device: a high-altitude base station, for example, a device such as a hot air balloon that can provide a wireless access function for the terminal device, a low-earth orbit satellite, a medium-earth orbit satellite, or a high-earth orbit satellite, or may be an uncrewed aerial vehicle, or may be a mobile switching center and a device that functions as a base station in device-to-device (Device-to-Device, D2D), vehicle-to-everything (vehicle-to-everything, V2X), or machine-to-machine (machine-to-machine, M2M) communication.

The following describes some application scenarios to which this application is applicable. The following application scenarios are merely some example scenarios, and this application is also applicable to another application scenario. This is not specifically limited in this application.

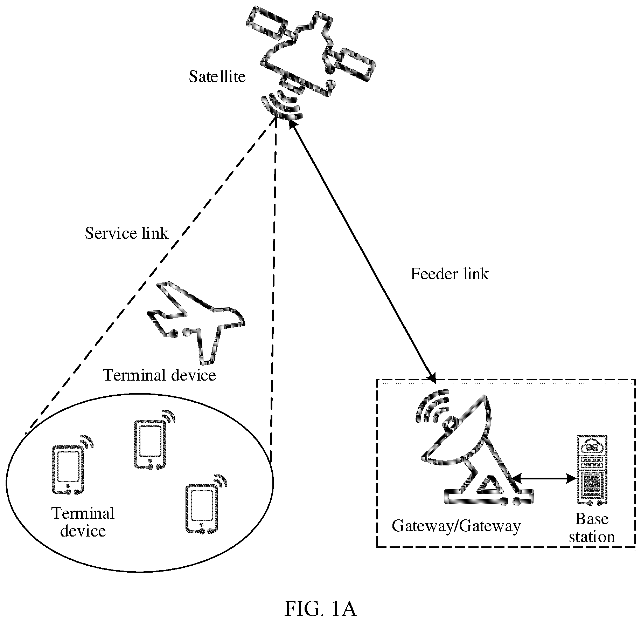

FIG. 1A is a diagram of a communication system according to an embodiment of this application. Refer to FIG. 1A. The communication system shown in FIG. 1A includes a terminal device, a satellite, a base station, and a gateway (also referred to as a gateway). The terminal device may include user equipment, an aircraft, and the like. For details about a form of the terminal device, refer to the foregoing related descriptions.

A link between the satellite and the terminal device may be referred to as a service link (service link), and a link between the satellite and the gateway may be referred to as a feeder link (feeder link). In FIG. 1A, the satellite may operate in a transparent (transparent) mode. The gateway has functions of the base station or a part of functions of the base station. In this case, the gateway may be considered as the base station. Alternatively, the base station and the gateway may be separately deployed. For details, refer to FIG. 1A.

As shown in FIG. 1A, the base station and the terminal device perform communication transmission by using the satellite and the gateway. In other words, the satellite and the gateway function as routers to transmit data or information between the terminal device and the base station. The technical solution in this application may be used between the terminal device and the base station.

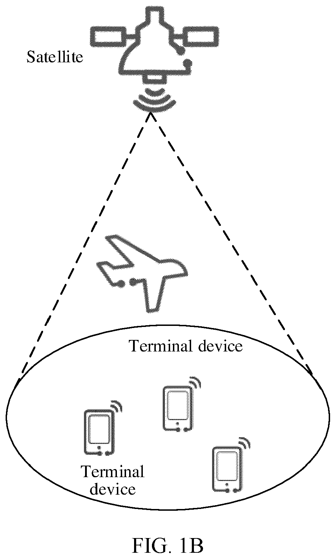

FIG. 1B is another diagram of a communication system according to an embodiment of this application. Refer to FIG. 1B. The communication system shown in FIG. 1B includes a terminal device and a satellite. The terminal device may include user equipment, an aircraft, and the like. For details about a form of the terminal device, refer to the foregoing related descriptions.

As shown in FIG. 1B, the satellite may operate in a regeneration mode, the satellite has a data processing capability, functions of a base station, or a part of functions of a base station, and the satellite can provide an access service and a communication service for the terminal device. The satellite may be considered as the base station, and the technical solution in this application may be used between the terminal device and the satellite.

The following describes some technical terms used in this application.

1. Physical cell identifier (physical cell identifier, PCI): The physical cell identifier consists of a cell identifier 1 $N_{ID}^{(1)}$ and a cell identifier 2 $N_{ID}^{(2)}$ of a cell, and a specific value of the PCI of the cell may be expressed as:

$$N_{ID}^{\text{cell}} = N_{ID}^{(1)} + N_{ID}^{(2)} \quad \text{Formula (1)}$$

A value of the cell identifier 1 ( $N_{ID}^{(1)}$ ) is determined based on m sequences (three sequences with a length of 127) used by a primary synchronization signal (primary synchronization signal, PSS) of a synchronization signal and physical broadcast channel block (synchronization signal and physical broadcast channel block, SSB) of the cell, and a value range of $N_{ID}^{(1)}$ is 0, 1, and 2. A value of the cell identifier 2 ( $N_{ID}^{(2)}$ ) is determined based on a gold sequence (where each primary synchronization sequence corresponds to 336 sequences with a length of 127) used by a secondary synchronization signal (secondary synchronization signal, SSS) of the SSB of the cell, and a value range of $N_{ID}^{(2)}$ is 0 to 335. Therefore, a maximum value of $N_{ID}^{\text{cell}}$ is 1008. In other words, PCIs supporting a maximum of 1008 cells are not the same. When there are more than 1008 cells in the communication system, there may be two different cells with a same PCI.

2. Serving cell: The serving cell is a cell on which the terminal device currently camps, and the terminal device communicates with the network device by using the cell.

3. Neighboring cell: The neighboring cell is a cell different from the serving cell of the terminal device. For example, the neighboring cell is a cell whose distance from the serving cell falls within a specific range, or a cell directly neighboring to the serving cell.

4. First-order neighbor cell: If two cells are directly neighboring to each other, a position relationship between the two cells is that the two cells are first-order neighbor cells of each other.

5. Second-order neighbor cell: If two cells are not directly neighboring to each other, but cells directly neighboring to the two cells are the same, a position relationship between the two cells is that the two cells are second-order neighbor cells of each other.

6. Cell identity (Cell ID): Each cell has a corresponding cell identity. For example, a length of the cell identity may be 14 bits, and a maximum quantity supported by the cell identity is 16384. It should be noted that the length of the cell identity may be extended according to an actual network requirement, and the cell identity may alternatively be of another length. This is specifically limited in this application. The foregoing example does not limit the length of the cell identifier in this application.

7. Cell identifier (Cell Identifier): The cell identifier consists of a base station identifier and the cell identity. For example, a cell identifier (Cell Identifier) in an NR communication system consists of a gNodeB ID and the cell identity (Cell ID). For example, in the NR communication system, a length of the cell identifier may be 36 bits. Therefore, in the NR communication system, a maximum quantity supported by the cell identifier is $6.87e^{10}$. A cell identifier (Cell Identifier) in an evolved universal mobile telecommunications system terrestrial radio access network (evolved universal mobile telecommunications system terrestrial radio access network, E-UTRAN) communication system consists of an eNodeB ID and the cell identity (Cell ID). For example, in the E-UTRAN communication system, a length of the cell identifier may be 28 bits. Therefore, in the E-UTRAN communication system, a maximum quantity supported by the cell identifier is $2.68e^8$. It should be noted that lengths of cell identifiers in different communication systems may be extended according to the actual network requirement, and the cell identifier may alternatively be of another length. This is not specifically limited in this application. The foregoing example does not limit the length of the cell identifier in this application.

8. Cell global identifier (cell global identifier, CGI): The cell global identifier includes a mobile country code (mobile country code, Mcc), a mobile network code (mobile network code, Mnc), the base station identifier, and the cell identity. For example, in the NR communication system, the base station identifier may be the gNodeB ID. In the E-UTRAN communication system, the base station identifier may be the eNodeB ID. For example, a length of the CGI may be 60 bits, and a maximum quantity supported by the CGI is $1.529e^{18}$. It should be noted that lengths of CGIs in different communication systems may be extended based on the actual network requirement, and the CGI may alternatively be of another length. This is not specifically limited in this application. The foregoing example does not limit the length of the CGI in this application.

It should be noted that the cell identity, the cell identifier, and the cell global identifier are a possible definition manner. In an actual application, there may also be another definition manner. This is not specifically limited in this application.

The following describes the technical solutions of this application by using a satellite communication system as an example. The technical solutions are also applicable to another NTN system, and the following descriptions are not intended to limit this application.

A future satellite communication system is a large constellation consisting of tens of thousands or more satellites (for example, low-earth orbit satellites), and these satellites provide the communication service for the terminal device. For example, a starlink (starlink) constellation plans to launch 19 orbital layers, with a total of 41927 satellites. If a coverage area of one satellite is planned as one cell and a PCI of the cell is bound to the satellite, there are tens of thousands of moving cells.

It can be learned from the foregoing descriptions of the PCI that, when a quantity of cells included in the system is greater than 1008, there may be different cells using a same PCI in the system. For a terrestrial communication system, a terrestrial base station is static relative to the ground, and the PCI of the cell may be considered to be bound to a geographical position. Therefore, proper PCI planning and allocation can prevent neighboring cells (the first-order neighbor cells) or spaced cells (the second-order neighbor cells) from using a same PCI, and avoid a PCI conflict or PCI confusion.

For a satellite cell, if a PCI is bound to a ground position, a PCI corresponding to a satellite changes frequently when the satellite moves. Consequently, PCI management is complex and burdensome. Therefore, a reasonable solution is to bind the PCI to the satellite. As the satellite moves and a coverage area changes, a PCI corresponding to a same cell changes when the cell is covered by different satellites. However, this PCI allocation manner may cause a case in which a same PCI occurs in the first-order neighbor cells or the second-order neighbor cells as a constellation scale of the satellite communication system increases.

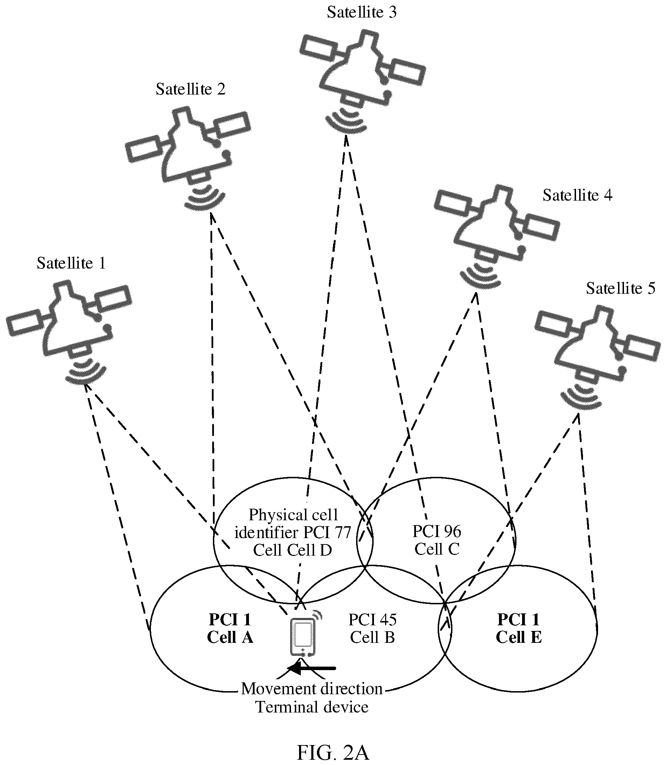

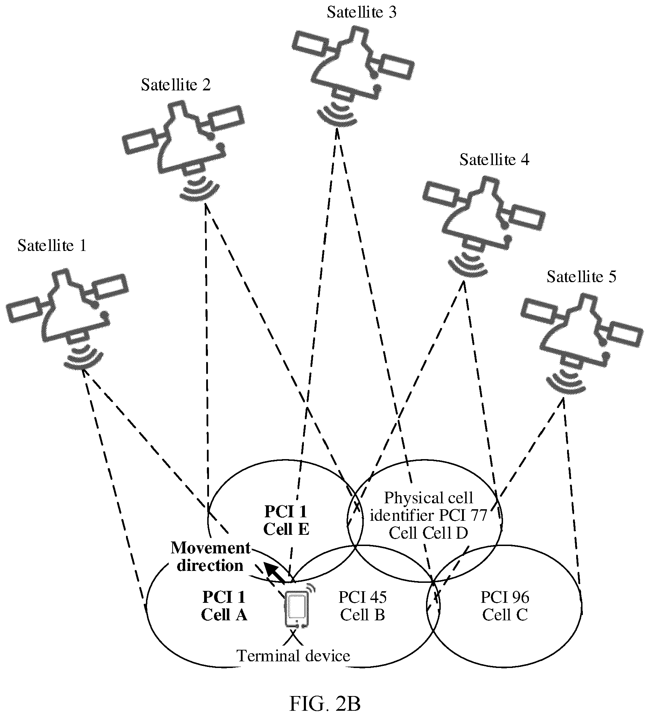

The following describes two possible PCI conflict or PCI confusion scenarios with reference to FIG. 2A and FIG. 2B.

FIG. 2A is a diagram of a confusion scenario of two cells with a same PCI according to an embodiment of this application. Refer to FIG. 2A. A cell A and a cell E have a same PCI, namely, PCI 1. The cell A and the cell E are two first-order neighbor cells of a cell B, and a position relationship between the cell A and the cell E is that the cell A and the cell E are second-order neighbor cells of each other. A terminal device camps on the cell B. When the terminal device moves to the cell A, the terminal device reports a measurement result (including a PCI of a cell) to a source base station. For example, the terminal device reports a measurement result of the cell A. Because the cell A and the cell E have the same PCI, the source base station cannot distinguish a cell to which the terminal device moves. Consequently, the source base station cannot indicate the terminal device to perform handover, access, or reselection, and the terminal device cannot complete the handover, access, or reselection. Alternatively, the source base station sends a handover request to an incorrect target base station, causing a handover failure.

FIG. 2B is a diagram of a conflict scenario of two cells with a same PCI according to an embodiment of this application. Refer to FIG. 2B. A cell A and a cell E have a same PCI, namely, PCI 1. A terminal device camps on a cell B. A source base station cannot distinguish, based on the PCI 1 reported by the terminal device, a PCI 1 cell measured by the terminal device. Consequently, the source base station cannot indicate the terminal device to perform handover, access, or reselection, and the terminal device cannot complete the handover, access, or reselection. Alternatively, the source base station sends a handover request to an incorrect target base station, causing a handover failure.

It can be learned from the foregoing analysis that, in an NTN system, if a quantity of cells included in the NTN system exceeds a specific quantity, a problem of a PCI conflict or PCI confusion of the cells occurs. A network device cannot accurately select a suitable cell for the terminal device based on a measurement result reported by the terminal device. Consequently, the terminal device cannot complete the handover, access, or reselection, or the terminal device fails to perform handover, access, or reselection, affecting communication performance.

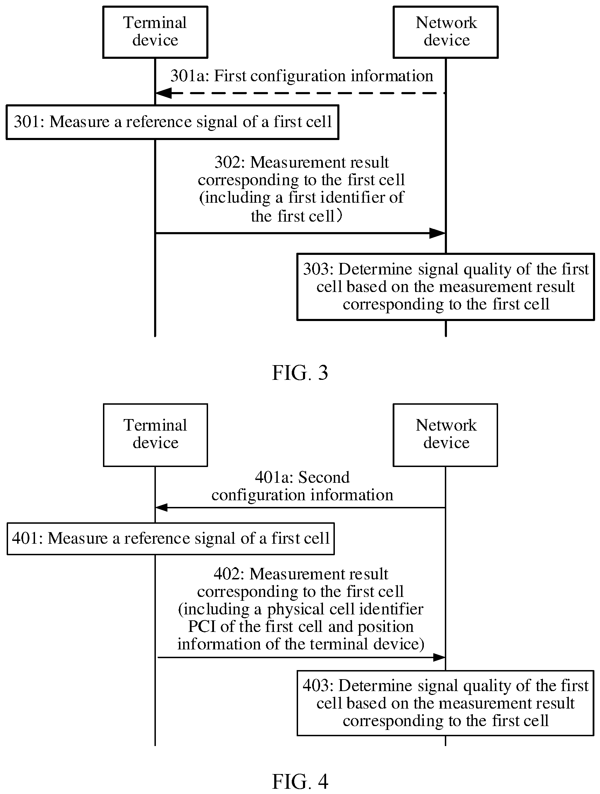

This application provides corresponding technical solutions, to resolve the foregoing problems and improve the communication performance. For details, refer to related descriptions of the embodiments shown in FIG. 3 and FIG. 4 in the following.

The following describes a measurement process in which a terminal device measures a reference signal.

The measurement process mainly includes the following three steps.

1. Measurement configuration

When the terminal device enters a connected mode, a network device sends measurement configuration information to the terminal device by using a radio resource control (radio resource control, RRC) reconfiguration message. Alternatively, after the terminal device is in the connected mode or completes handover, the network device sends updated measurement configuration information to the terminal device by using the RRC reconfiguration message.

The measurement configuration information includes the following information: a measurement object, a measurement report configuration, and some other measurement configurations.

The measurement object includes a measured communication system, a measured frequency (or a measured cell), and the like. The network device indicates cells or frequencies on which the terminal device measures signal quality of a reference signal. The measured cell may be a serving cell or a neighboring cell.

The measurement report configuration includes a measurement event, a trigger quantity reported by the measurement event and the like. The network device indicates, to the terminal device, a condition for reporting a measurement report and a criterion for reporting the measurement report.

Some other measurement configurations include a synchronization signal and physical broadcast channel block measurement timing configuration (SSB Measurement Timing Configuration, SMTC), a measurement gap (GAP), measurement filtering, measurement duration, a measurement time interval, and the like.

2. Measurement performing

The terminal device determines, based on the measurement configuration information, whether measurement needs to be performed on the neighboring cell. If measurement needs to be performed, the terminal device performs measurement on the neighboring cell based on the measurement configuration information.

3. Measurement report reporting

After receiving the measurement configuration information of the network device, the terminal device performs measurement based on the measurement configuration information, and then sends the measurement report to the network device. Specifically, the terminal device determines the measurement event, and when the condition for reporting the measurement event is met, the terminal device sends the measurement report to the network device based on the measurement configuration information.

The following describes a measurement type in a new radio (new radio, NR) system.

In the NR system, measurement types include event-triggered (eventTriggered) measurement, periodical (periodical) measurement, and report CGI (reportCGI) measurement.

1. eventTriggered measurement

In the NR system, the measurement report is a measurement result based on an SSB or a CSI-RS. Each measurement report configuration has an independent identifier (reportConfigId). When an entry threshold of a measurement event is met for a period of time (timeToTrigger), the terminal device triggers sending of the measurement report. After reporting is triggered, the terminal device starts a timer (reportInterval) between a plurality of measurements and a counter (reportAmount) for counting a quantity of measurement times. A procedure of the eventTriggered measurement ends when a quantity of reporting times reaches a threshold. If a count of the counter is infinite (infinity), the terminal device keeps reporting the measurement report periodically.

One possible reporting configuration of the eventTriggered measurement is shown below:

- a report type, which is "event": reportType=eventTriggered;
- a quantity of reporting times: reportAmount≥1; and
- a valid reporting interval: reporting time interval (reportInterval).

The following describes definitions of some measurement events with reference to Table 1.

Event types of the measurement events include A1, A2, A3, A4, A5, A6, and B1. For different handover functions of the terminal device, different measurement events are specifically used. Each measurement event represents a signal quality state of a cell. The specific measurement events are shown in Table 1.

**Table 1**

| Event type | Event definition |
|---|---|
| A1 | Signal quality of the serving cell becomes higher than a corresponding threshold |
| A2 | The signal quality of the serving cell becomes lower than the corresponding threshold |
| A3 | Signal quality of the neighbor cell is higher than that of the serving cell by a specific offset |
| A4 | The signal quality of the neighbor cell becomes higher than a corresponding threshold |
| A5 | The signal quality of the serving cell becomes lower than a threshold 1, and the signal quality of the neighbor cell becomes higher than a threshold 2 |

(continued)

| Event type | Event definition |
| --- | --- |
| A6 | The signal quality of the neighbor cell is higher than that of a secondary cell by a specific offset |
| B1 | Signal quality of an inter-RAT neighbor cell becomes higher than a corresponding threshold |

2. Periodical measurement

After measurement configuration information on a network side is delivered, the terminal device may perform corresponding measurement based on configuration content in the measurement configuration information, and send the measurement report based on a specified periodicity and interval (reportInterval).

Some possible reporting configurations of the periodical measurement are shown below:

- a report type, which is a "periodicity": reportType=periodical;
- a quantity of reporting times: reportAmount≥1; and
- a valid reporting interval: reportInterval.

3. reportCGI measurement

The reportCGI measurement is mainly used for an automatic neighbor relationship (automatic neighbor relationship, ANR). In a communication system, a neighbor cell (which may also be referred to as a neighboring cell) is a possible target cell to which a user hands over. In a terrestrial network, a neighbor cell relationship needs to be maintained in a timely manner because the neighbor cell relationship changes in operation and maintenance scenarios such as network swapping and capacity expansion. Manual configuration of the neighbor cell relationship has high costs, and is inefficient and prone to errors. If the neighbor cell relationship is not properly configured, a service drop may occur, and user experience is affected. Therefore, the ANR is introduced.

The following describes the technical solutions of this application with reference to specific embodiments.

FIG. 3 is a diagram of an embodiment of a communication method according to an embodiment of this application. Refer to FIG. 3. The communication method includes the following steps.

301: A terminal device measures a reference signal of a first cell.

The first reference signal is a channel state information reference signal (channel state information reference signal, CSI-RS) or an SSB. The first cell is a cell different from a serving cell of the terminal device, and there are one or more first cells. For example, the first cell is a neighboring cell of the serving cell of the terminal device.

Specifically, the terminal device measures signal quality of the reference signal of the first cell, to obtain signal quality of the first cell.

The communication method provided in this application is applied to an NTN system, and a quantity of cells included in the NTN system exceeds a first threshold.

Optionally, the first threshold may be determined with reference to at least one of the following: a maximum quantity supported by a PCI and network deployment of the NTN system. That a quantity of cells included in the NTN system exceeds a first threshold includes: The quantity of cells included in the NTN system is greater than the first threshold; or the quantity of cells included in the NTN system is greater than or equal to the first threshold.

For example, the maximum quantity supported by the PCI is 1008. Therefore, the first threshold may be 1008. It can be learned from the foregoing descriptions of the PCI that PCIs supporting a maximum of 1008 cells are not the same, and if the quantity of cells included in the NTN system exceeds 1008, there may be two cells using a same PCI. Therefore, the terminal device and a network device may distinguish between the cells by using the technical solutions provided in this application, to avoid a handover failure, an access failure, or a reselection failure caused by a PCI conflict or PCI confusion.

For example, the network device may determine, with reference to the maximum quantity supported by the PCI and the network deployment of the NTN system, that the first threshold is 1500. For example, an algorithm of the network deployment is good, and even if there are two cells using the same PCI, there is no conflict or confusion. When the quantity of cells included in the NTN system exceeds 1500, there are two cells using the same PCI. Therefore, the terminal device and the network device may distinguish between the cells by using the technical solutions provided in this application, to avoid the handover failure, the access failure, or the reselection failure caused by the PCI conflict or PCI confusion.

For example, if the NTN system has 10,000 satellites, and an area irradiated by each satellite is one cell, the NTN system has 10,000 cells. If the area irradiated by each satellite is divided into two cells, the NTN system has 20,000 cells.

302: The terminal device sends a measurement result corresponding to the first cell to the network device. The measurement result corresponding to the first cell includes a first identifier of the first cell. Correspondingly, the network device receives the measurement result corresponding to the first cell from the terminal device.

The first identifier of the first cell uniquely identifies the first cell.

It should be noted that, optionally, a length of the first identifier may be determined with reference to the quantity of cells included in the NTN system. In other words, a maximum quantity supported by the first identifier should be greater than the quantity of cells included in the NTN system.

The following describes several possible forms of the first identifier.

1. The first identifier includes a cell identity (Cell ID) of the first cell.

For example, a length of the cell identity of the first cell may be 14 bits, and a maximum quantity supported by the cell identity of the first cell is 16384. In the NTN system, the terminal device can uniquely identify the first cell by using the cell identity of the first cell.

In this implementation, optionally, the measurement result corresponding to the first cell further includes at least one of the following: a base station identifier, an Mcc, and an Mnc of the first cell.

2. The first identifier includes a cell identifier (Cell Identifier) of the first cell.

For example, in an NR system, a length of the cell identifier of the first cell may be 36 bits, and a maximum quantity supported by the cell identifier of the first cell is $6.87e^{10}$. In the NTN system, the terminal device can uniquely identify the first cell by using the cell identifier of the first cell.

In this implementation, optionally, the measurement result corresponding to the first cell further includes at least one of the following: an Mcc and an Mnc of the first cell.

3. The first identifier includes a CGI of the first cell.

For example, a length of the CGI of the first cell may be 60 bits, and a maximum quantity supported by the CGI of the first cell is $1.529e^{18}$. In the NTN system, the terminal device can uniquely identify the first cell by using the CGI of the first cell.

In some implementations, the measurement result corresponding to the first cell further includes at least one of the following: a PCI of the first cell and position information of the terminal device.

In this implementation, the terminal device may include the PCI of the first cell in the measurement result in a conventional manner, and further include the first identifier of the first cell in the measurement result. This helps the network device obtain some physical layer information about the first cell by using the PCI of the first cell.

In some implementations, the measurement result corresponding to the first cell includes the signal quality and frequency information of the first cell.

Optionally, the signal quality of the first cell may include at least one of the following: reference signal received power (reference signal received power, RSRP), reference signal received quality (reference signal received quality, RSRQ), and a signal to interference plus noise ratio (signal to interference plus noise ratio, SINR) of the first cell.

Optionally, the terminal device may perform measurement and report the measurement result in the foregoing manner of step 301 and step 302 by default. Alternatively, the terminal device may perform measurement and report the measurement result based on the configuration information sent by the network device. This is not specifically limited in this application.

Optionally, the embodiment shown in FIG. 3 further includes step 301a, and step 301a may be performed before step 301.

301a: The network device sends first configuration information to the terminal device. Correspondingly, the terminal device receives the first configuration information from the network device.

The first configuration information is used to configure event-triggered measurement and reporting of the first identifier for the terminal device.

Optionally, the first configuration information includes at least one of the following: a measurement event, a measurement report type of the measurement event, and an event trigger condition of the measurement event, a quantity of reporting times, a reporting interval, and reported content.

For details about the measurement event, refer to related descriptions of the preceding table. The measurement report type includes the event-triggered measurement and the reporting of the first identifier by the terminal device. The quantity of reporting times indicates a quantity of reporting times of reporting the measurement result of the first cell. The reporting interval is a time interval between two times of consecutively reporting the measurement result of the first cell by the terminal device. The reported content includes the first identifier. Optionally, the reported content further includes the signal quality of the first cell and the frequency information of the first cell.

In this implementation, in the technical solution of this application, based on the measurement types described above, a possible measurement type, namely, the event-triggered measurement and the reporting of the first identifier, is added.

Optionally, the network device sends the first configuration information to the terminal device by using an RRC reconfiguration (RRCReconfiguration) message.

The following describes the first configuration information with reference to a specific form of the first identifier.

1. The first identifier is the cell identifier, and the first configuration information may be referred to as configuration event-triggered cell identifier (eventTriggered-CellIdentity) measurement information. The configuration event-triggered cell identifier measurement information mainly includes:

-a measurement report type, which is "event-triggered cell identifier (CellIdentity) measurement": reportType=eventTriggered-CellIdentity;
-a quantity of reporting times: reportAmount≥1;
-a reporting interval: reportInterval; and
-reported content: information such as a value of the signal quality, the frequency information, and a cell identifier (Cell Identifier) in the CGI.

Optionally, the reported content further includes at least one of the following: the PCI of the first cell and the position information of the terminal device. For a representation form of the signal quality, refer to the foregoing related descriptions.

In this implementation, in the measurement type of the event-triggered measurement and the reporting of the first identifier provided in this application, the PCI of the first cell is included in the measurement result, and the first identifier of the first cell is further included in the measurement result. This helps the network device obtain some physical layer information about the first cell by using the PCI of the first cell.

When reportAmount=1, it indicates that the terminal device reports the measurement result only once when a measurement condition is met. Therefore, the terminal device may ignore the reporting interval.

For example, the configuration event-triggered cell identifier measurement information is represented by the following code:

```
ReportConfigNR ::=                  SEQUENCE {
    reportType                          CHOICE {
        periodical                          PeriodicalReportConfig,
        eventTriggered                      EventTriggerConfig,
        reportCGI                           ReportCGI,
        eventTriggered-CellIdentity         eventTriggered-CellIdentityConfig
    }
}
```

For example, the network device configures, for the terminal device by using an RRC reconfiguration message, an A4 measurement event, a corresponding threshold, corresponding frequency information, and a corresponding measurement gap (where in a gap period for measuring neighboring cells, for example, a gap periodicity has two modes, a gap periodicity of Type 1 is 20 ms to 160 ms, and a gap length ranges from 1.5 ms to 20 ms).

Optionally, for the measurement event configured by the network device for the terminal device, measurement may be performed based on the signal quality of the first cell. In an actual application, the measurement may alternatively be performed based on time, a position, or a distance to one or more reference points. This is not specifically limited in this application. For example, the network device may configure the terminal device to perform measurement between a time point 0 and a time point t1. Alternatively, for example, the network device may configure the terminal device to perform measurement in a range of a longitude and latitude position A to a longitude and latitude position B. Alternatively, for example, the network device may configure the terminal device to perform measurement at a distance less than C from a reference point.

The terminal device performs, in the measurement gap period, measurement based on the configuration event-triggered cell identifier measurement information. After the signal quality of the first cell is higher than the corresponding threshold for a period of time, the terminal device obtains information such as the signal quality and the cell identifier of the first cell, and sends the measurement result of the first cell to the network device. The measurement result of the first cell includes the cell identifier, the signal quality, and the like of the first cell.

2. The first identifier is the CGI, and the first configuration information may be referred to as configuration event-triggered CGI (eventTriggered-CGI) measurement information. The configuration event-triggered CGI measurement information mainly includes:

- a measurement report type, which is "event-triggered cell global identifier (CGI) measurement": reportType=event-Triggered-CGI;
- a quantity of reporting times: reportAmount≥1;
- a reporting interval: reportInterval; and
- reported content: information such as a value of the signal quality, the frequency information, and the CGI.

Optionally, the reported content further includes at least one of the following: the PCI of the first cell and the position information of the terminal device. For a representation form of the signal quality, refer to the foregoing related descriptions.

In this implementation, in the measurement type of the event-triggered measurement and the reporting of the first identifier provided in this application, the PCI of the first cell is included in the measurement result, and the first identifier of the first cell is further included in the measurement result. This helps the network device obtain some physical layer information about the first cell by using the PCI of the first cell.

For example, the configuration event-triggered cell identifier measurement information is represented by the following code:

```
ReportConfigNR ::=              SEQUENCE {
    reportType                      CHOICE {
        periodical                      PeriodicalReportConfig,
        eventTriggered                  EventTriggerConfig,
        reportCGI                       ReportCGI,
        eventTriggered-CGI              eventTriggered-CGIConfig
    }
}
```

The terminal device may measure the signal quality of the first cell based on the configuration event-triggered CGI measurement information, to obtain information such as the CGI of the first cell. Then, the terminal device sends the measurement result of the first cell to the network device. The measurement result of the first cell includes the CGI, the signal quality, and the like of the first cell.

3. The first identifier is the cell identity, and the first configuration information may be referred to as configuration event-triggered cell identity (Cell ID) measurement information. The configuration event-triggered cell identity measurement information mainly includes:

- a measurement report type, which is "event-triggered cell identity (Cell ID) measurement": reportType=eventTriggered-Cell ID;
- a quantity of reporting times: reportAmount≥1;
- a reporting interval: reportInterval; and
- reported content: information such as a value of the signal quality, the frequency information, and a cell identity (Cell ID) in the CGI.

Optionally, the reported content further includes at least one of the following: the PCI of the first cell and the position information of the terminal device. For a representation form of the signal quality, refer to the foregoing related descriptions.

In this implementation, in the measurement type of the event-triggered measurement and the reporting of the first identifier provided in this application, the PCI of the first cell is included in the measurement result, and the first identifier of the first cell is further included in the measurement result. This helps the network device obtain some physical layer information about the first cell by using the PCI of the first cell.

For example, the configuration event-triggered cell identity measurement information is represented by the following code:

```
ReportConfigNR ::=              SEQUENCE {
    reportType                      CHOICE {
        periodical                      PeriodicalReportConfig,
        eventTriggered                  EventTriggerConfig,
        reportCGI                       ReportCGI,
        eventTriggered-Cell ID          eventTriggered- Cell IDConfig
    }
}
```

The terminal device may measure the signal quality of the first cell based on the configuration event-triggered Cell ID measurement information, to obtain information such as the Cell ID of the first cell. Then, the terminal device sends the measurement result of the first cell to the network device. The measurement result of the first cell includes the Cell ID, the signal quality, and the like of the first cell.

Optionally, the foregoing step 301a specifically includes: If at least two neighboring cells with a same PCI appear in neighboring cells of the serving cell, the network device sends the first configuration information to the terminal device; or if the quantity of cells included in the NTN system exceeds the first threshold, the network device sends the first configuration information to the terminal device.

The first cell is the neighboring cell of the serving cell.

In a possible implementation, the network device determines, based on a time-varying characteristic of a neighboring relationship between cells in the NTN system, that at least two neighboring cells having a same PCI appear in the neighboring cells of the serving cell. The network device may send the first configuration information to the terminal device by using the RRC reconfiguration message.

In another possible implementation, if the network device determines that the quantity of cells included in the NTN system exceeds the first threshold, the network device may send the first configuration information to the terminal device by using the RRC reconfiguration message. This avoids a problem that the network device cannot distinguish between and identify cells because neighboring cells of the serving cell use a same PCI.

For example, as shown in FIG. 2A, the terminal device is located in a cell B, and the network device determines that neighboring cells (namely, a cell A and a cell E) of the cell B use a same PCI. The network device may send the first configuration information to the terminal device.

For example, as shown in FIG. 2B, the terminal device is located in a cell B, and the network device determines that neighboring cells (namely, a cell A and a cell E) of the cell B use a same PCI. The network device may send the first configuration information to the terminal device.

303: The network device determines the signal quality of the first cell based on the measurement result corresponding to the first cell.

It can be learned from the foregoing descriptions that the measurement result corresponding to the first cell includes the first identifier, the signal quality, and the like of the first cell. The network device can uniquely determine the first cell by using the first identifier, and determine the signal quality of the first cell.

For example, as shown in FIG. 2A, the terminal device is located in the cell B, and the terminal device reports a measurement result corresponding to the cell A to the network device. The measurement result corresponding to the cell A includes a first identifier and signal quality of the cell A. Therefore, the network device can uniquely determine the cell A by using the first identifier of the cell A. In this way, the network device does not indicate the terminal device to hand over, access, or reselect to an incorrect cell when the cell A and the cell E have the same PCI.

For example, as shown in FIG. 2B, the terminal device is located in the cell B, and the terminal device reports a measurement result corresponding to the cell A to the network device. The measurement result corresponding to the cell A includes a first identifier and signal quality of the cell A. Therefore, the network device can uniquely determine the cell A by using the first identifier of the cell A. In this way, the network device does not indicate the terminal device to hand over, access, or reselect to an incorrect cell when the cell A and the cell E have the same PCI.

Application scenarios of the communication method provided in this application include any one of the following:

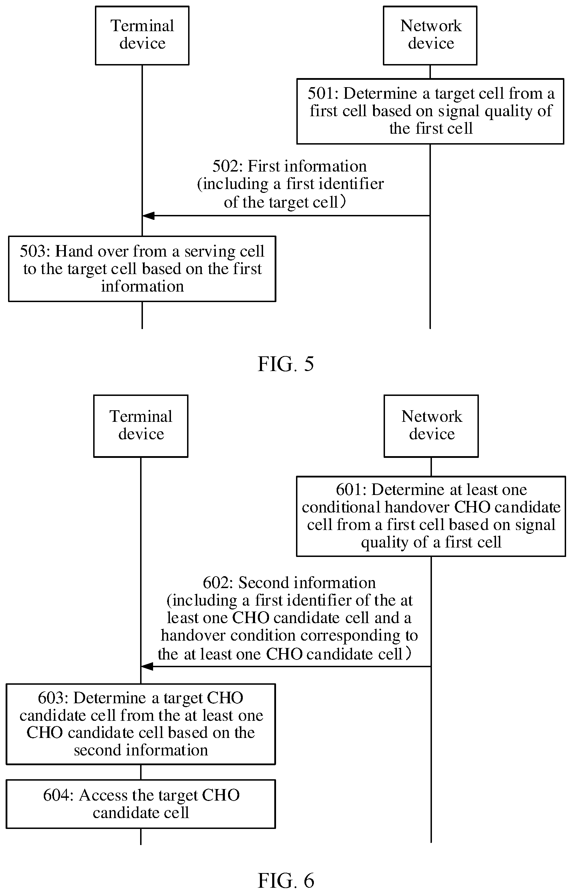

a handover scenario, a reselection scenario, and an access scenario of the terminal device. This is not specifically limited in this application. Some possible application scenarios are shown below in the embodiments shown in FIG. 5 to FIG. 7. For details, refer to the following related descriptions.

In embodiments of this application, in an NTN system, a quantity of cells included in the NTN system exceeds a first threshold. The terminal device measures the reference signal of the first cell. Then, the terminal device sends the measurement result corresponding to the first cell to the network device, where the measurement result corresponding to the first cell includes the first identifier of the first cell, and the first identifier uniquely identifies the first cell. It can be learned that, when the quantity of cells included in the NTN system exceeds the first threshold, the measurement result reported by the terminal device to the network device includes the first identifier of the first cell, and the first identifier uniquely identifies the first cell. Therefore, the network device can determine specific cells whose measurement results are reported, that is, can distinguish signal quality of specific cells, to avoid cell confusion or a cell conflict caused by a same PCI. This helps the network device accurately select a suitable cell for the terminal device based on the measurement result, thereby improving communication performance. For example, the network device may select a cell with best signal quality for the terminal device based on the measurement result. This avoids a handover failure, an access failure, or a reselection failure between the network device and the terminal device due to confusion, reduces a handover delay, an access delay, or a reselection delay of the terminal device, and improves the communication performance.

It should be noted that, optionally, in the NTN system, if an area irradiated by one satellite is one cell, the first identifier of the first cell in the embodiment shown in FIG. 3 may be replaced with information about a satellite corresponding to the first cell (for example, an area irradiated by the satellite is the first cell). In other words, the terminal device includes the information about the satellite in the measurement result. The network device may identify the first cell by using the information about the satellite, to avoid cell confusion or a cell conflict caused by a same PCI. The information about the satellite includes ephemeris information of the satellite and a number of the satellite. The ephemeris information of the satellite includes a satellite position, an orbit height, a communication elevation angle, and a speed direction. Different satellites have different numbers.

It should be noted that, optionally, in the NTN system, if an area irradiated by one satellite includes a plurality of cells, the first identifier of the first cell in the embodiment shown in FIG. 3 may be replaced with information about a satellite corresponding to the first cell and information about a position relationship between the terminal device and the satellite. In other words, the terminal device includes the information about the satellite and the information about the position relationship between the terminal device and the satellite in the measurement result. The network device identifies the first cell by using the information about the satellite and the information about the position relationship, to avoid cell confusion or a conflict caused by a same PCI.

FIG. 4 is a diagram of another embodiment of a communication method according to an embodiment of this application. Refer to FIG. 4. The communication method includes the following steps.

401: A terminal device measures a reference signal of a first cell.

Step 401 is similar to step 301 in the embodiment shown in FIG. 3. For details, refer to related descriptions of step 301 in the embodiment shown in FIG. 3. Details are not described herein again.

402: The terminal device sends a measurement result corresponding to the first cell to a network device. The measurement result corresponding to the first cell includes a PCI of the first cell and position information of the terminal device. Correspondingly, the network device receives the measurement result corresponding to the first cell from the terminal device.

In this implementation, the measurement result corresponding to the first cell further includes the position information of the terminal device, so that the network device distinguishes the first cell. For example, as shown in FIG. 2A, the terminal device is located in a cell B, and the terminal device reports a measurement result corresponding to a cell A to the network device. The measurement result corresponding to the cell A includes a PCI of the cell A and the position information of the terminal device. Because the terminal device is close to the cell A, and is far from a cell E, the network device may determine, based on the position information of the terminal device, that the terminal device reports the measurement result corresponding to the cell A. Alternatively, if the terminal device reports the measurement result corresponding to the cell A and a measurement result corresponding to the cell E, both the measurement result corresponding to the cell A and the measurement result corresponding to the cell E include the position information of the terminal device. The network device may determine, based on the position information of the terminal device, that a measurement result indicating good signal quality should correspond to the cell A, and does not mistakenly consider that the measurement result indicating good signal quality corresponds to the cell E.

Optionally, the embodiment shown in FIG. 4 further includes step 401a, and step 401a may be performed before step 401.

401a: The network device sends second configuration information to the terminal device. Correspondingly, the terminal device receives the second configuration information from the network device.

The second configuration information is used to configure event-triggered measurement and reporting of the position information of the terminal device for the terminal device.

Optionally, the second configuration information includes at least one of the following: a measurement event, a measurement report type of the measurement event, and an event trigger condition of the measurement event, a quantity of reporting times, a reporting interval, and reported content.

For details about the measurement event, refer to related descriptions of the preceding table. The measurement report type includes the event-triggered measurement and the reporting of the position information of the terminal device by the terminal device. The quantity of reporting times indicates a quantity of reporting times of reporting the measurement result of the first cell. The reporting interval is a time interval between two times of consecutively reporting the measurement result of the first cell by the terminal device. The reported content includes the PCI of the first cell and the position information of the terminal device. Optionally, the reported content further includes signal quality and frequency information of the first cell.

In this implementation, in the technical solution of this application, based on the measurement types described above, a possible measurement type, namely, the event-triggered measurement and the reporting of the position information of the terminal device, is added.

Optionally, the network device sends the second configuration information to the terminal device by using an RRC reconfiguration message.

Based on the foregoing step 401a, optionally, the foregoing step 402 specifically includes:

The terminal device sends the measurement result corresponding to the first cell to the network device based on the first configuration information.

For example, the second configuration information may be referred to as configuration event-triggered position information (eventTriggered-Position) measurement information. The configuration event-triggered position information measurement information mainly includes:

- a measurement report type, which is "event-triggered position information (eventTriggered-Position) measurement": reportType=eventTriggered-Position;
- a quantity of reporting times: reportAmount$\geq$1;
- a reporting interval: reportInterval; and
- reported content: information such as the PCI, the position information of the terminal device, a value of the signal quality, and the frequency information

In this implementation, in the measurement type of the event-triggered position information provided in this application, the position information of the terminal device and the PCI of the first cell are included in the measurement result. This helps the network device identify the first cell, and avoids confusion or a conflict caused by a same PCI. For a representation form of the signal quality, refer to the foregoing related descriptions.

When reportAmount=1, it indicates that the terminal device reports the measurement result only once when a measurement condition is met. Therefore, the terminal device may ignore the reporting interval.

For example, the terminal device may measure the signal quality of the first cell based on the configuration event-triggered position information measurement information, to obtain the PCI of the first cell and the position information of the terminal device. Then, the terminal device sends the measurement result corresponding to the first cell to the network device, where the measurement result corresponding to the first cell includes the PCI, the signal quality, and the frequency information of the first cell, the position information of the terminal device, and the like.

403: The network device determines the signal quality of the first cell based on the measurement result corresponding to the first cell.

Specifically, the network device can accurately identify the first cell by using the PCI of the first cell and the position information of the terminal device that are included in the measurement result corresponding to the first cell, and determine the signal quality of the first cell.

Application scenarios of the communication method provided in this application include any one of the following: a handover scenario, a reselection scenario, and an access scenario of the terminal device. This is not specifically limited in this application.

For example, as shown in FIG. 2A, the terminal device is located in the cell B, and the terminal device reports the measurement result corresponding to the cell A to the network device. The measurement result corresponding to the cell A includes the PCI of the cell A and the position information of the terminal device. Because the terminal device is close to the cell A, and is far from the cell E, the network device may determine, based on the position information of the terminal device, that the terminal device reports the measurement result corresponding to the cell A, and does not mistakenly consider that the terminal device reports the measurement result corresponding to the cell E. The network device determines that signal quality of the cell A is better than signal quality of the cell B, and the network device may indicate the terminal device to hand over or reselect to the cell B. This avoids a problem that the terminal device fails to perform handover because the network device indicates the terminal device to hand over to an incorrect cell due to the cell confusion or the cell conflict caused by the same PCI, improves communication performance, and reduces a handover delay or a reselection delay of the terminal device. For example, if there is no position information of the terminal device, the terminal device actually reports the measurement result corresponding to the cell A, but the network device may consider that the measurement result is the measurement result corresponding to the cell E. Consequently, the terminal device hands over to the cell A, but the network device indicates the terminal device to hand over to the cell E, causing the handover failure.

For example, as shown in FIG. 2A, the terminal device is located in the cell B, and the terminal device reports the measurement result corresponding to the cell A and the measurement result corresponding to the cell E. Both the measurement result corresponding to the cell A and the measurement result corresponding to the cell E include the position information of the terminal device. Because the terminal device is close to the cell A, and is far from the cell E, the network device may determine, based on the position information of the terminal device, that a measurement result indicating good signal quality should correspond to the cell A, and does not mistakenly consider that the measurement result indicating good signal quality corresponds to the cell E. The network device determines that the signal quality of the cell A is better than the signal quality of the cell B, and the network device may indicate the terminal device to hand over or reselect to the cell B. This avoids the problem that the terminal device fails to perform handover because the network device indicates the terminal device to hand over to an incorrect cell due to the cell confusion or the cell conflict caused by the same PCI, improves the communication performance, and reduces the handover delay or the reselection delay of the terminal device.

In this embodiment of this application, in an NTN system, a quantity of cells included in the NTN system exceeds a first threshold. The terminal device measures a reference signal of the first cell. Then, the terminal device sends the measurement result corresponding to the first cell to the network device, where the measurement result corresponding to the first cell includes the PCI of the first cell and the position information of the terminal device. It can be learned that, when the quantity of cells included in the NTN system exceeds the first threshold, the measurement result reported by the terminal device to the network device includes the PCI of the first cell and the position information of the terminal device. This helps the network device accurately identify specific cells whose measurement results are reported, that is, distinguish signal quality of specific cells, to avoid cell confusion or a cell conflict caused by a same PCI. This helps the network device accurately select a suitable cell for the terminal device based on the measurement result, thereby improving communication performance. For example, the network device may select a cell with best signal quality for the terminal device based on the measurement result. This avoids a handover failure, an access failure, or a reselection failure between the network device and the terminal device due to confusion, reduces a handover delay, an access delay, or a reselection delay of the terminal device, and improves the communication performance.

The following describes some application scenarios of this application based on the embodiment shown in FIG. 3.

With reference to an embodiment shown in FIG. 5, the following describes a solution in which the technical solutions of this application are applied to a handover scenario of a terminal device.

FIG. 5 is a diagram of another embodiment of a communication method according to an embodiment of this application. Refer to FIG. 5. An application scenario shown in FIG. 5 is the handover scenario of the terminal device. The communication method includes the following steps.

501: A network device determines a target cell from a first cell based on signal quality of the first cell.

Optionally, the network device may determine the target cell (target cell) from the first cell based on the signal quality of the first cell and load of the first cell.

For example, the network device may select, from the first cell based on the signal quality of the first cell, a cell with best signal quality as the target cell.

For example, the network device may select, from the first cell based on the signal quality of the first cell, a cell with good signal quality. Then, the network device selects, from the cell with good signal quality, a cell with minimum load as the target cell.

502: The network device sends first information to the terminal device. The first information includes a first identifier of the target cell. Correspondingly, the terminal device receives the first information from the network device.

The first information indicates the terminal device to hand over to the target cell. Optionally, the network device may send the first information to the terminal device by using an RRC reconfiguration message.

For example, the first identifier is a cell identity (Cell ID) of the target cell. As shown in FIG. 2A, the target cell is a cell A, and the first information includes the cell identity (Cell ID) of the target cell.

For example, the first identifier is a cell identifier (Cell Identifier) of the target cell. As shown in FIG. 2A, the target cell is the cell A, and the first information includes the cell identifier (Cell Identifier) of the target cell.

For example, the first identifier is a CGI of the target cell. As shown in FIG. 2B, the target cell is a cell A, and the first information includes the CGI of the target cell.

Because different cells use different first identifiers, the network device may distinguish between specific cells by using first identifiers of the cells, and no confusion is caused.

503: The terminal device hands over from a serving cell to the target cell based on the first information.

For example, as shown in FIG. 2A, the first information includes the first identifier of the cell A, and the terminal device hands over from a cell B to the cell A.

In this embodiment of this application, the terminal device receives the first information from the network device, where the first information includes the first identifier of the target cell, and the first information indicates the terminal device to hand over to the target cell. The terminal device hands over from the serving cell to the target cell based on the first information. It can be learned that the network device may distinguish a specific cell by using the first identifier in a measurement result corresponding to the first cell, and select the target cell from the first cell. The network device indicates, by using the first information, the terminal device to hand over to the target cell, so that the terminal device successfully completes cell handover. This avoids cell confusion or a cell conflict caused because cells have a same PCI, so that the terminal device completes cell handover, and a handover delay of the terminal device is reduced.

With reference to an embodiment shown in FIG. 6, the following describes a solution in which the technical solutions of this application are applied to a conditional handover scenario of a terminal device.

FIG. 6 is a diagram of another embodiment of a communication method according to an embodiment of this application. Refer to FIG. 6. The communication method includes the following steps.

601: A network device determines at least one CHO candidate cell from a first cell based on signal quality of the first cell.

Specifically, the embodiment shown in FIG. 6 mainly describes a specific process in which the technical solutions provided in this application are applied to the conditional handover scenario. For example, when the terminal device is near an overlapping area of two cells, and is about to enter another cell from one cell, the terminal device performs cell handover. However, the terminal device is at an edge of a source cell, and the terminal device cannot successfully send a measurement result due to poor channel quality. Alternatively, the source cell cannot successfully send a handover instruction to the terminal device, causing a handover failure. If the handover fails, the terminal device needs to re-apply for accessing a system and establish an RRC connection. This causes communication interruption for longer time. Therefore, the network device may first select the at least one CHO candidate cell for the terminal device before the terminal device moves to the edge of the source cell, so as to help the terminal device perform conditional handover.

Optionally, the network device may determine the at least one CHO candidate cell based on the signal quality of the first cell and load of the first cell.

For example, the network device may select, from the first cell, at least one cell with good signal quality as the at least one CHO candidate cell.

For example, the network device selects some cells with good signal quality from the first cell, and then selects at least one cell with light load from these cells as the at least one CHO candidate cell.

602: The network device sends second information to the terminal device. The second information includes a first identifier of the at least one CHO candidate cell and a handover condition corresponding to the at least one CHO candidate cell. Correspondingly, the terminal device receives the second information from the network device.

For the first identifier, refer to related descriptions in the embodiment shown in FIG. 3. Details are not described herein again.

The handover condition corresponding to the at least one CHO candidate cell includes at least one of the following: handover is performed based on an RSRP, an RSRQ, or an SINR obtained from a measured cell, based on a timer, based on a timing advance (timing advance, TA) value, based on a TA change rate threshold, based on a Doppler effect (Doppler) threshold, or based on a Doppler change rate threshold.

Optionally, the network device sends the second information to the terminal device by using an RRC reconfiguration message. Correspondingly, the terminal device may send an RRC reconfiguration complete message to the network device.

603: The terminal device determines a target CHO candidate cell from the at least one CHO candidate cell based on the second information.

Specifically, the terminal device keeps a connection to a serving cell, and the terminal device determines whether each of the at least one CHO candidate cell meets a corresponding handover condition. If it is detected that any of the at least one CHO candidate cell meets the corresponding handover condition, the terminal device uses the CHO candidate cell as the target CHO candidate cell.

604: The terminal device accesses the target CHO candidate cell.

Specifically, the terminal device synchronizes with the target CHO candidate cell by using a stored configuration of the target CHO candidate cell. The terminal device sends the RRC reconfiguration complete message to the target CHO candidate cell, to complete a handover process, so that the terminal device accesses the target CHO candidate cell.

It can be learned that after the terminal device approaches another cell, the terminal device may perform conditional handover. This avoids a case in which the handover is affected because channel quality of the serving cell of the terminal device deteriorates, and improves reliability of the handover. The second information includes the first identifier of the at least one CHO candidate cell. This helps the terminal device and the network device distinguish between different CHO candidate cells, and avoids a problem of a handover failure due to cell confusion caused because different cells use a same PCI. Therefore, this helps the terminal device complete a handover procedure, and reduces a handover delay.

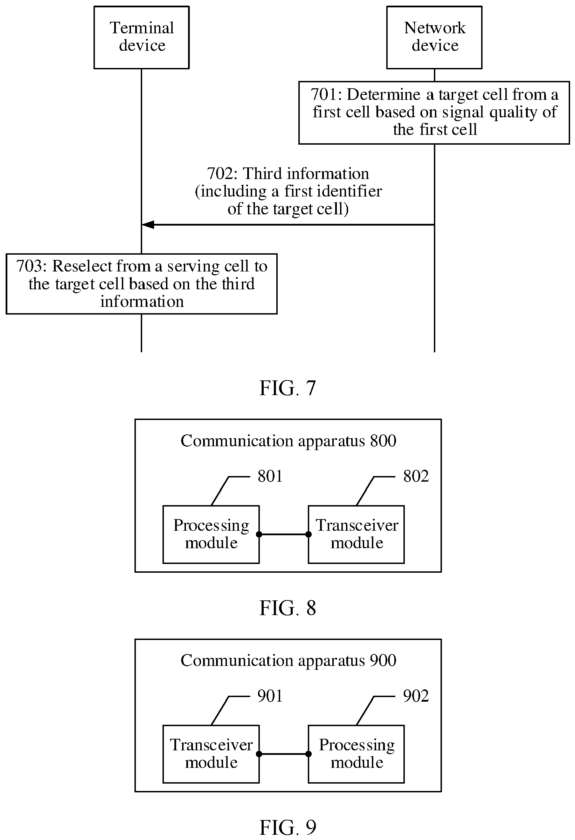

With reference to an embodiment shown in FIG. 7, the following describes a solution in which the technical solutions of this application are applied to a cell reselection scenario of a terminal device.

FIG. 7 is a diagram of another embodiment of a communication method according to an embodiment of this application. Refer to FIG. 7. The communication method includes the following steps.

701: A network device determines a target cell from a first cell based on signal quality of the first cell.

Step 701 is similar to step 501 in the embodiment shown in FIG. 5. For details, refer to the related descriptions of step 501 in the embodiment shown in FIG. 5.

Specifically, the embodiment shown in FIG. 7 mainly describes a specific process in which the technical solutions provided in this application are applied to the cell reselection scenario. For example, the terminal device is in an idle (idle) state, the terminal device enters a new cell from a camped-on cell, and the terminal device needs to perform cell reselection, to camp on the new cell.

702: The network device sends third information to the terminal device. The third information includes a first identifier of the target cell. Correspondingly, the terminal device receives the third information from the network device.

Specifically, the network device may determine whether the target cell meets a reselection criterion, and if the target cell meets the reselection criterion, the network device sends the third information to the terminal device, where the third information includes the first identifier of the target cell. For example, the network device may determine whether the target cell can be normally camped on and whether the target cell can be accessed. If access to the target cell is not limited, the network device determines that the target cell can be used as a reselection cell of the terminal device.

It should be noted that if the target cell does not meet the reselection criterion, the network device indicates the terminal device to stay in a current serving cell.

703: The terminal device reselects from the serving cell to the target cell based on the third information.

It can be learned that the terminal device is in the idle mode, and the terminal device may receive the third information from the network device, where the third information includes the first identifier of the target cell. The terminal device can accurately identify the target cell based on the first identifier, and hand over to the target cell. This avoids a problem of a cell reselection failure due to cell confusion caused because different cells use a same PCI. Therefore, this helps the terminal device complete a cell reselection procedure, and reduces a cell reselection delay.

The following describes a communication apparatus provided in an embodiment of this application. FIG. 8 is a diagram of a structure of a communication apparatus according to an embodiment of this application. The communication apparatus may be configured to perform the steps performed by the communication apparatus in the embodiments shown in FIG. 3, FIG. 4,

FIG. 5, FIG. 6, and FIG. 7. For details, refer to related descriptions in the foregoing method embodiments.

A communication apparatus 800 is used in an NTN system, and a quantity of cells included in the NTN system exceeds a first threshold; and the communication apparatus 800 includes a processing module 801 and a transceiver module 802.

The processing module 801 is configured to measure a reference signal of a first cell; and
the transceiver module 802 is configured to send a measurement result corresponding to the first cell to a network device, where the measurement result corresponding to the first cell includes a first identifier of the first cell, and the first identifier uniquely identifies the first cell.

In a possible implementation, the first identifier includes at least one of the following: a cell identity (Cell ID), a cell identifier (Cell Identifier), and a CGI of the first cell.

In another possible implementation, the measurement result corresponding to the first cell further includes at least one of the following: a physical cell identifier PCI of the first cell and position information of the communication apparatus 800.

In another possible implementation, the transceiver module 802 is further configured to:

receive first configuration information from the network device, where the first configuration information is used to configure event-triggered measurement and reporting of the first identifier for the communication apparatus 800; and the transceiver module 802 is specifically configured to:
send the measurement result corresponding to the first cell to the network device based on the first configuration information.

In another possible implementation, the first configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the first identifier by the communication apparatus 800;
the quantity of reporting times indicates a quantity of reporting times of reporting the measurement result corresponding to the first cell;

the reporting interval is a time interval between two times of consecutively reporting the measurement result of the at least one first cell by the communication apparatus 800; and the reported content includes the first identifier.

In another possible implementation, the reported content further includes at least one of the following: signal quality and frequency information of the first cell.

In another possible implementation, the transceiver module 802 is further configured to:

receive first information from the network device, where the first information includes a first identifier of a target cell, the first information indicates the communication apparatus 800 to hand over to the target cell, and the target cell belongs to the first cell; and
the processing module 801 is further configured to:
hand over from a serving cell to the target cell based on the first information.

In another possible implementation, the transceiver module 802 is further configured to:

receive second information from the network device, where the second information includes a first identifier of at least one CHO candidate cell and a CHO handover condition corresponding to each of the at least one CHO candidate cell, a first identifier corresponding to each CHO candidate cell uniquely identifies the CHO candidate cell, and the at least one CHO candidate cell belongs to the first cell; and
the processing module 801 is further configured to:

determine, a target CHO candidate cell from the at least one CHO candidate cell based on the second information; and
access the target CHO candidate cell.

In another possible implementation, the transceiver module 802 is further configured to:

receive third information from the network device, where the third information includes the first identifier of the target cell, the third information indicates the communication apparatus 800 to reselect to the target cell, and the target cell belongs to the at least one first cell; and
the processing module 801 is further configured to:
reselect from the serving cell to the target cell based on the third information.

In another possible implementation, the measurement result corresponding to the first cell includes signal quality and frequency information of the first cell.

Optionally, the communication apparatus 800 shown in FIG. 8 may be further configured to perform the following solution.

The processing module 801 is configured to measure a reference signal of a first cell; and the transceiver module 802 is configured to send a measurement result corresponding to the first cell to a network device, where the measurement result corresponding to the first cell includes a PCI the first cell and position information of the communication apparatus 800.

In a possible implementation, the transceiver module 802 is further configured to:

obtain second configuration information from the network device, where the second configuration information is used to configure event-triggered measurement and reporting of the position information of the communication apparatus 800 for the communication apparatus 800; and
the transceiver module 802 is specifically configured to:
send the measurement result corresponding to the first cell to the network device based on the second configuration information.

In another possible implementation, the second configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the position information of the communication apparatus 800 by the communication apparatus 800;
the quantity of reporting times indicates a quantity of reporting times of reporting the measurement result corresponding to the first cell;

the reporting interval is a time interval between two times of consecutively reporting the measurement result of the at least one first cell by the communication apparatus 800; and the reported content includes the position information of the communication apparatus 800 and the PCI of the first cell.

In another possible implementation, the reported content further includes at least one of the following: signal quality and frequency information of the first cell.

In another possible implementation, the measurement result corresponding to the first cell includes signal quality and frequency information of the first cell.

The following describes a communication apparatus provided in an embodiment of this application. FIG. 9 is a diagram of a structure of a communication apparatus according to an embodiment of this application. The communication apparatus may be configured to perform the steps performed by the communication apparatus in the embodiments shown in FIG. 3, FIG. 4, FIG. 5, FIG. 6, and FIG. 7. For details, refer to related descriptions in the foregoing method embodiments.

A communication apparatus 900 is used in an NTN system, and a quantity of cells included in the NTN system exceeds a first threshold. The communication apparatus 900 includes a transceiver module 901 and a processing module 902.

The transceiver module 901 is configured to receive a measurement result corresponding to a first cell from a terminal device, where the measurement result corresponding to the first cell includes a first identifier of the first cell, and the first identifier uniquely identifies the first cell; and

the processing module 902 is configured to determine signal quality of the first cell based on the measurement result corresponding to the first cell.

In a possible implementation, the first identifier includes at least one of the following: a cell identity (Cell ID), a cell identifier (Cell Identifier), and a CGI of the first cell.

In another possible implementation, the measurement result corresponding to the first cell further includes at least one of the following: a PCI of the first cell and position information of the terminal device.

In another possible implementation, the transceiver module 901 is further configured to:

send first configuration information to the terminal device, where the first configuration information is used to configure event-triggered measurement and reporting of the first identifier for the terminal device.

In another possible implementation, the first configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the first identifier by the terminal device; the quantity of reporting times indicates a quantity of reporting times of reporting the measurement result of the first cell; the reporting interval is a time interval between two times of consecutively reporting the measurement result of the first cell by the terminal device; and the reported content includes the first identifier.

In another possible implementation, the transceiver module 901 is specifically configured to:

if at least two neighboring cells with a same PCI exist in neighboring cells of a serving cell, send the first configuration information to the terminal device.

In another possible implementation, the reported content further includes at least one of the following: the signal quality and frequency information of the first cell.

In another possible implementation, the processing module 902 is further configured to:

determine a target cell from the first cell based on the signal quality of the first cell; and
the transceiver module 901 is further configured to:
send first information to the terminal device, where the first information includes a first identifier of the target cell, and the first information indicates the terminal device to hand over to the target cell.

In another possible implementation, the processing module 902 is further configured to:

determine at least one CHO candidate cell from the first cell based on the signal quality of the first cell; and
the transceiver module 901 is further configured to:
send second information to the terminal device, where the second information includes a first identifier of the at least one CHO candidate cell and a CHO handover condition corresponding to each of the at least one CHO candidate cell, and a first identifier corresponding to each CHO candidate cell uniquely identifies the CHO candidate cell.

In another possible implementation, the processing module 902 is further configured to:

determine the target cell from at least one first cell based on the signal quality of the at least one first cell; and the transceiver module 901 is further configured to:
send third information to the terminal device, where the third information includes the first identifier of the target cell, and the third information indicates the terminal device to reselect to the target cell.

In another possible implementation, the measurement result corresponding to the first cell includes signal quality and frequency information of the first cell.

Optionally, the communication apparatus 900 shown in FIG. 9 may further perform the following solution.

The transceiver module 901 is configured to receive a measurement result corresponding to a first cell from a terminal device, where the measurement result corresponding to the first cell includes a PCI of the first cell and position information of the terminal device; and
the processing module 902 is configured to determine signal quality of the first cell based on the measurement result corresponding to the first cell.

In a possible implementation, the transceiver module 901 is further configured to:
send second configuration information to the terminal device, where the second configuration information is used to configure event-triggered measurement and reporting of the position information of the terminal device for the terminal device.

In another possible implementation, the second configuration information includes at least one of the following: a measurement event, a measurement report type of the measurement event, and an event trigger condition of the measurement event, a quantity of reporting times, a reporting interval, and reported content;

the measurement report type includes the event-triggered measurement and the reporting of the position information of the terminal device by the terminal device;
the quantity of reporting times indicates a quantity of reporting times of reporting the measurement result corresponding to the first cell;
the reporting interval is a time interval between two times of consecutively reporting the measurement result of the at least one first cell by the terminal device; and the reported content includes the position information of the terminal device and the PCI of the first cell.

In another possible implementation, the reported content further includes at least one of the following: signal quality and frequency information of the first cell.

In another possible implementation, the measurement result corresponding to the first cell includes signal quality and frequency information of the first cell.

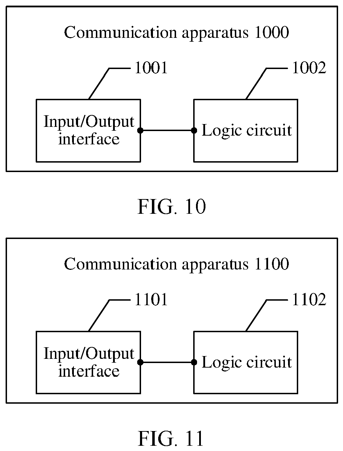

FIG. 10 is a diagram of another structure of a communication apparatus according to an embodiment of this application. Refer to FIG. 10. A communication apparatus 1000 includes an input/output interface 1001 and a logic circuit 1002. The communication apparatus 1000 shown in FIG. 10 may be configured to perform the steps performed by the terminal device in the embodiments shown in FIG. 3 to FIG. 7.

Optionally, the logic circuit 1002 may have a function of the processing module 801 in the embodiment shown in FIG. 8. The input/output interface 1001 may have a function of the transceiver module 802 in the embodiment shown in FIG. 8.

The communication apparatus 1000 shown in FIG. 10 may perform the technical solutions shown in the foregoing method embodiments. An implementation principle and a beneficial effect of the communication apparatus 1000 are similar to those of the foregoing method embodiments, and details are not described herein again.

FIG. 11 is a diagram of another structure of a communication apparatus according to an embodiment of this application. Refer to FIG. 11. A communication apparatus 1100 includes an input/output interface 1101 and a logic circuit 1102. The communication apparatus 1100 shown in FIG. 11 may be configured to perform the steps performed by the network device in the embodiments shown in FIG. 3 to FIG. 7.

Optionally, the logic circuit 1102 may have a function of the processing module 902 in the embodiment shown in FIG. 9. The input/output interface 1102 may have a function of the transceiver module 901 in the embodiment shown in FIG. 9.

The communication apparatus 1100 shown in FIG. 11 may perform the technical solutions shown in the foregoing method embodiments. An implementation principle and a beneficial effect of the communication apparatus 1100 are similar to those of the foregoing method embodiments, and details are not described herein again.

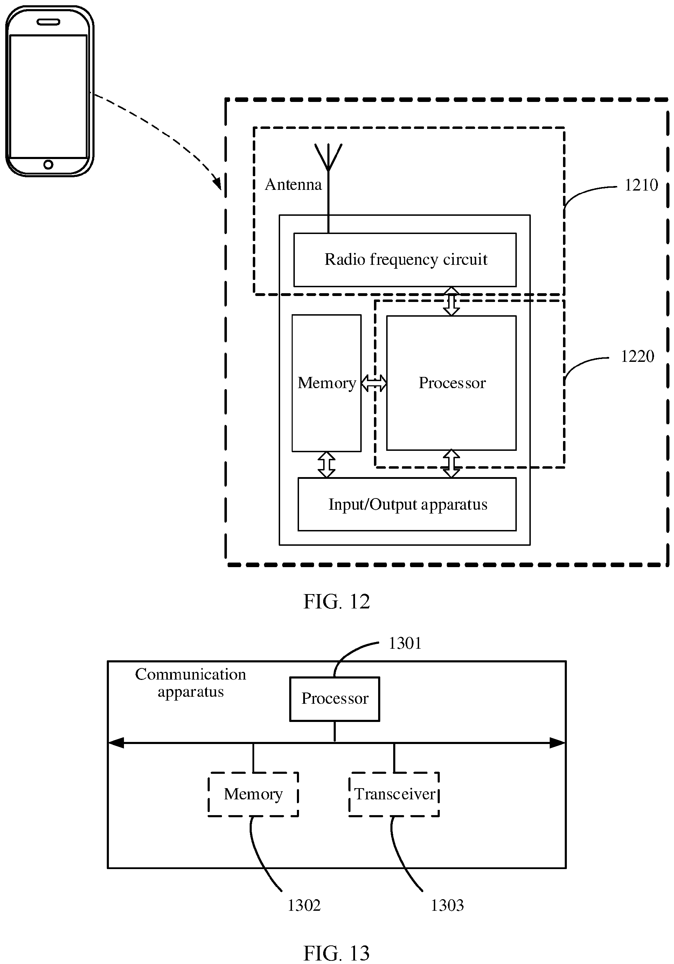

FIG. 12 is a possible diagram of a structure of a terminal device below.

FIG. 12 is a diagram of a simplified structure of a terminal device. For ease of understanding and illustration, an example in which the terminal device is a mobile phone is used in FIG. 12. As shown in FIG. 12, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and the data. The radio frequency circuit is mainly configured to: perform conversion between a baseband signal and a radio frequency signal, and process the radio frequency signal. The antenna is mainly configured to receive and send the radio frequency signal in a form of an electromagnetic wave.

The input/output apparatus, such as a touchscreen, a display, or a keyboard, is mainly configured to receive data entered by a user and output data to the user. It should be noted that some types of terminal devices may have no input/output apparatus.

When needing to send data, after performing baseband processing on the to-be-sent data, the processor outputs the baseband signal to the radio frequency circuit, and the radio frequency circuit sends the radio frequency signal to the outside in the form of the electromagnetic wave through the antenna after performing radio frequency processing on the baseband signal. When data is sent to the terminal device, the radio frequency circuit receives the radio frequency signal through the antenna, converts the radio frequency signal into the baseband signal, and outputs the baseband signal to the processor. The processor converts the baseband signal into data, and processes the data.

For ease of description, FIG. 12 shows only one memory and one processor. An actual terminal device product may include one or more processors and one or more memories. The memory may also be referred to as a storage medium, a storage device, or the like. The memory may be disposed independent of the processor, or may be integrated into the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 12, the terminal device includes a transceiver unit 1210 and a processing unit 1220. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1210 and that is configured to implement the receiving function may be considered as a receiving unit, and a component that is in the transceiver unit 1210 and that is configured to implement the sending function may be considered as a sending unit. That is, the transceiver unit 1210 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiving circuit, or the like. The sending unit sometimes may also be referred to as a transmitter machine, a transmitter, a transmitter circuit, or the like.

It should be understood that the transceiver unit 1210 is configured to perform a sending operation and a receiving operation of the terminal device in the foregoing method embodiments, and the processing unit 1220 is configured to perform an operation other than the receiving operation and the sending operation of the terminal device in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 13 is a diagram of another structure of a communication apparatus according to an embodiment of this application. The communication apparatus may be configured to perform the steps performed by the communication apparatus in the embodiments shown in FIG. 3 to FIG. 7. For details, refer to related descriptions in the foregoing method embodiments.

The communication apparatus includes a processor 1301. Optionally, the communication apparatus further includes a memory 1302 and a transceiver 1303.

In a possible implementation, the processor 1301, the memory 1302, and the transceiver 1303 are separately connected through a bus, and the memory stores computer instructions.

The processing module 902 in the foregoing embodiment may be specifically the processor 1301 in this embodiment. Therefore, specific implementation of the processor 1301 is not described again. The transceiver module 901 in the foregoing embodiment may be specifically the transceiver 1303 in this embodiment. Therefore, specific implementation of the transceiver 1303 is not described again.

An embodiment of this application further provides a communication system. The communication system includes the communication apparatus shown in FIG. 8 and the communication apparatus shown in FIG. 9. The communication apparatus shown in FIG. 8 may be configured to perform all or some of the steps performed by the terminal device in the embodiments shown in FIG. 3 to FIG. 7. The communication apparatus shown in FIG. 9 may be configured to perform all or some of the steps performed by the communication apparatus in the embodiments shown in FIG. 3 to FIG. 7.

An embodiment of this application further provides a computer program product including instructions. When the computer program product runs on a computer, the computer is enabled to perform the communication methods in the embodiments shown in FIG. 3 to FIG. 7.

An embodiment of this application further provides a computer-readable storage medium, including computer instructions. When the computer instructions are run on a computer, the computer is enabled to perform the communication methods in the embodiments shown in FIG. 3 to FIG. 7.

An embodiment of this application further provides a chip apparatus, including a processor, configured to: be connected to a memory, and invoke a program stored in the memory, to enable the processor to perform the communication methods in the embodiments shown in FIG. 3 to FIG. 7.

The processor mentioned in any of the foregoing may be a general-purpose central processing unit, a microprocessor, an application-specific integrated circuit (application-specific integrated circuit, ASIC), or one or more integrated circuits configured to control program execution of the communication methods in the embodiments shown in FIG. 3 to FIG. 7. The memory mentioned in any of the foregoing may be a read-only memory (read-only memory, ROM), another type of static storage device that can store static information and instructions, a random access memory (random access memory, RAM), or the like.

A person skilled in the art may clearly understand that, for a purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located at one position, or may be distributed on a plurality of network units. Some or all of the units may be selected based on an actual requirement to achieve an objective of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or a part contributing to conventional technologies, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Unless otherwise specified, for same or similar parts in embodiments of this application, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made; and these modifications or replacements do not make the essence of the corresponding technical solutions depart from the scope of the technical solutions in embodiments of this application.

**Claims**

1. A communication method, wherein the method is applied to a non-terrestrial network NTN system, a quantity of cells comprised in the NTN system exceeds a first threshold, and the method comprises:

measuring, by a terminal device, a reference signal of a first cell; and
sending, by the terminal device, a measurement result corresponding to the first cell to a network device, wherein the measurement result corresponding to the first cell comprises a first identifier of the first cell, and the first identifier uniquely identifies the first cell.

2. The method according to claim 1, wherein the first identifier comprises at least one of the following: a cell identity Cell ID, a cell identifier Cell Identifier, and a cell global identifier CGI of the first cell.

3. The method according to claim 2, wherein the measurement result corresponding to the first cell further comprises at least one of the following: a physical cell identifier PCI of the first cell and position information of the terminal device.

4. The method according to any one of claims 1 to 3, wherein the method further comprises:

obtaining, by the terminal device, first configuration information from the network device, wherein the first configuration information is used to configure event-triggered measurement and reporting of the first identifier for the terminal device; and
the sending, by the terminal device, a measurement result corresponding to the first cell to a network device comprises:
sending, by the terminal device, the measurement result corresponding to the first cell to the network device based on the first configuration information.

5. The method according to claim 4, wherein the first configuration information comprises at least one of the following: a measurement event, a measurement report type of the measurement event, and an event trigger condition of the measurement event, a quantity of reporting times, a reporting interval, and reported content;

the measurement report type comprises the event-triggered measurement and the reporting of the first identifier by the terminal device;
the quantity of reporting times indicates a quantity of reporting times of reporting the measurement result corresponding to the first cell;
the reporting interval is a time interval between two times of consecutively reporting the measurement result of the at least one first cell by the terminal device; and
the reported content comprises the first identifier.

6. The method according to any one of claims 1 to 5, wherein the method further comprises:

receiving, by the terminal device, first information from the network device, wherein the first information comprises a first identifier of a target cell, the first information indicates the terminal device to hand over to the target cell, and the target cell belongs to the first cell; and
handing over, by the terminal device, from a serving cell to the target cell based on the first information.

7. The method according to any one of claims 1 to 6, wherein the method further comprises:

receiving, by the terminal device, second information from the network device, wherein the second information comprises a first identifier of at least one conditional handover CHO candidate cell and a CHO handover condition corresponding to each of the at least one CHO candidate cell, a first identifier corresponding to each CHO candidate cell uniquely identifies the CHO candidate cell, and the at least one CHO candidate cell belongs to the first cell;
determining, by the terminal device, a target CHO candidate cell from the at least one CHO candidate cell based on the second information; and
accessing, by the terminal device, the target CHO candidate cell.

8. A communication method, wherein the method is applied to a non-terrestrial network NTN system, a quantity of cells comprised in the NTN system exceeds a first threshold, and the method comprises:

receiving, by a network device, a measurement result corresponding to a first cell from a terminal device, wherein the measurement result corresponding to the at least one first cell comprises a first identifier of the first cell, and the first identifier uniquely identifies the first cell; and

determining, by the network device, signal quality of the first cell based on the measurement result corresponding to the first cell.

9. The method according to claim 8, wherein the first identifier comprises at least one of the following: a cell identity Cell ID, a cell identifier Cell Identifier, and a cell global identifier CGI of the first cell.

10. The method according to claim 8 or 9, wherein the measurement result corresponding to the first cell further comprises at least one of the following: a physical cell identifier PCI of the first cell and position information of the terminal device.

11. The method according to any one of claims 8 to 10, wherein the method further comprises:
sending, by the network device, first configuration information to the terminal device, wherein the first configuration information is used to configure event-triggered measurement and reporting of the first identifier for the terminal device.

12. The method according to claim 11, wherein the first configuration information comprises at least one of the following: a measurement event, a measurement report type of the measurement event, and an event trigger condition of the measurement event, a quantity of reporting times, a reporting interval, and reported content;

the measurement report type comprises the event-triggered measurement and the reporting of the first identifier by the terminal device;
the quantity of reporting times indicates a quantity of reporting times of reporting the measurement result of the first cell;
the reporting interval is a time interval between two times of consecutively reporting the measurement result of the first cell by the terminal device; and
the reported content comprises the first identifier.

13. The method according to claim 11 or 12, wherein the sending, by the network device, first configuration information to the terminal device comprises:
if at least two neighboring cells with a same PCI exist in neighboring cells of a serving cell, sending, by the network device, the first configuration information to the terminal device.

14. The method according to any one of claims 8 to 13, wherein the method further comprises:

determining, by the network device, a target cell from the first cell based on the signal quality of the first cell; and
sending, by the network device, first information to the terminal device, wherein the first information comprises a first identifier of the target cell, and the first information indicates the terminal device to hand over to the target cell.

15. The method according to any one of claims 8 to 13, wherein the method further comprises:

determining, by the network device, at least one conditional handover CHO candidate cell from the first cell based on the signal quality of the first cell; and
sending, by the network device, second information to the terminal device, wherein the second information comprises a first identifier of the at least one conditional handover CHO candidate cell and a CHO handover condition corresponding to each of the at least one CHO candidate cell, and a first identifier corresponding to each CHO candidate cell uniquely identifies the CHO candidate cell.

16. A communication apparatus, wherein the communication apparatus is used in a non-terrestrial network NTN system, a quantity of cells comprised in the NTN system exceeds a first threshold, and the communication apparatus comprises:

a processing module, configured to measure a reference signal of a first cell; and
a transceiver module, configured to send a measurement result corresponding to the first cell to a network device, wherein the measurement result corresponding to the first cell comprises a first identifier of the first cell, and the first identifier uniquely identifies the first cell.

17. The communication apparatus according to claim 16, wherein the first identifier comprises at least one of the following:

a cell identity Cell ID, a cell identifier Cell Identifier, and a cell global identifier CGI of the first cell.

18. The communication apparatus according to claim 16 or 17, wherein the measurement result corresponding to the first cell further comprises at least one of the following: a physical cell identifier PCI of the first cell and position information of the communication apparatus.

19. The communication apparatus according to any one of claims 16 to 18, wherein the transceiver module is further configured to:

   receive first configuration information from the network device, wherein the first configuration information is used to configure event-triggered measurement and reporting of the first identifier for the communication apparatus; and
   the transceiver module is specifically configured to:
   send the measurement result corresponding to the first cell to the network device based on the first configuration information.

20. The communication apparatus according to claim 19, wherein the first configuration information comprises at least one of the following: a measurement event, a measurement report type of the measurement event, and an event trigger condition of the measurement event, a quantity of reporting times, a reporting interval, and reported content;

   the measurement report type comprises the event-triggered measurement and the reporting of the first identifier by the communication apparatus;
   the quantity of reporting times indicates a quantity of reporting times of reporting the measurement result corresponding to the first cell;
   the reporting interval is a time interval between two times of consecutively reporting the measurement result of the at least one first cell by the communication apparatus; and
   the reported content comprises the first identifier.

21. The communication apparatus according to any one of claims 16 to 20, wherein the transceiver module is further configured to:

   receive first information from the network device, wherein the first information comprises a first identifier of a target cell, the first information indicates the communication apparatus to hand over to the target cell, and the target cell belongs to the first cell; and
   the processing module is further configured to:
   hand over from a serving cell to the target cell based on the first information.

22. The communication apparatus according to any one of claims 16 to 20, wherein the transceiver module is further configured to:

   receive second information from the network device, wherein the second information comprises a first identifier of at least one conditional handover CHO candidate cell and a CHO handover condition corresponding to each of the at least one CHO candidate cell, a first identifier corresponding to each CHO candidate cell uniquely identifies the CHO candidate cell, and the at least one CHO candidate cell belongs to the first cell; and
   the processing module is further configured to:

   determine a target CHO candidate cell from the at least one CHO candidate cell based on the second information; and
   access the target CHO candidate cell.

23. A communication apparatus, wherein the communication apparatus is used in a non-terrestrial network NTN system, a quantity of cells comprised in the NTN system exceeds a first threshold, and the communication apparatus comprises:

   a transceiver module, configured to receive a measurement result corresponding to a first cell from a terminal device, wherein the measurement result corresponding to the at least one first cell comprises a first identifier of the first cell, and the first identifier uniquely identifies the first cell; and
   a processing module, configured to determine signal quality of the first cell based on the measurement result corresponding to the first cell.

24. The communication apparatus according to claim 23, wherein the first identifier comprises at least one of the following: a cell identity Cell ID, a cell identifier Cell Identifier, and a cell global identifier CGI of the first cell.

25. The communication apparatus according to claim 23 or 24, wherein the measurement result corresponding to the first cell further comprises at least one of the following: a physical cell identifier PCI of the first cell and position information of the terminal device.

26. The communication apparatus according to any one of claims 23 to 25, wherein the transceiver module is further configured to:
send first configuration information to the terminal device, wherein the first configuration information is used to configure event-triggered measurement and reporting of the first identifier for the terminal device.

27. The communication apparatus according to claim 26, wherein the first configuration information comprises at least one of the following: a measurement event, a measurement report type of the measurement event, and an event trigger condition of the measurement event, a quantity of reporting times, a reporting interval, and reported content;

the measurement report type comprises the event-triggered measurement and the reporting of the first identifier by the terminal device;
the quantity of reporting times indicates a quantity of reporting times of reporting the measurement result of the first cell;
the reporting interval is a time interval between two times of consecutively reporting the measurement result of the first cell by the terminal device; and
the reported content comprises the first identifier.

28. The communication apparatus according to claim 26 or 27, wherein the transceiver module is specifically configured to:
if at least two neighboring cells with a same PCI exist in neighboring cells of a serving cell, send the first configuration information to the terminal device.

29. The communication apparatus according to any one of claims 23 to 28, wherein the processing module is further configured to:

determine a target cell from the first cell based on the signal quality of the first cell; and
the transceiver module is further configured to:
send first information to the terminal device, wherein the first information comprises a first identifier of the target cell, and the first information indicates the terminal device to hand over to the target cell.

30. The communication apparatus according to any one of claims 23 to 28, wherein the processing module is further configured to:

determine at least one conditional handover CHO candidate cell from the first cell based on the signal quality of the first cell; and
the transceiver module is further configured to:
send second information to the terminal device, wherein the second information comprises a first identifier of the at least one conditional handover CHO candidate cell and a CHO handover condition corresponding to each of the at least one CHO candidate cell, and a first identifier corresponding to each CHO candidate cell uniquely identifies the CHO candidate cell.

31. A communication apparatus, wherein the communication apparatus comprises a processor and a memory;

the memory is configured to store a computer program; and
the processor is configured to invoke and run the computer program stored in the memory, to enable the communication apparatus to perform the method according to any one of claims 1 to 7, or to enable the communication apparatus to perform the method according to any one of claims 8 to 15.

32. A communication apparatus, wherein the communication apparatus comprises a processor, and the processor is configured to execute a computer program or computer instructions in a memory, to perform the method according to any one of claims 1 to 7, or to perform the method according to any one of claims 8 to 15.

33. A communication apparatus, wherein the communication apparatus comprises a logic circuit and an input/output interface; and

the logic circuit is configured to perform the processing operations according to any one of claims 1 to 7, and the input/output interface is configured to perform the receiving and sending operations according to any one of claims 1 to 7; or
the logic circuit is configured to perform the processing operations according to any one of claims 8 to 15, and the input/output interface is configured to perform the receiving and sending operations according to any one of claims 8 to 15.

34. A computer-readable storage medium, comprising computer instructions, wherein when the computer instructions are run on a computer, the computer is enabled to perform the method according to any one of claims 1 to 7, or the computer is enabled to perform the method according to any one of claims 8 to 15.

35. A computer program product, comprising computer-executable instructions, wherein when the computer-executable instructions are run on a computer, the computer is enabled to perform the method according to any one of claims 1 to 7 or claims 8 to 15.

Satellite

Service link

Feeder link

Terminal device

Terminal
device

Gateway/Gateway

Base
station

FIG. 1A

Satellite

Terminal device

Terminal device

FIG. 1B

Satellite 3

Satellite 2

Satellite 4

Satellite 1

Satellite 5

Physical cell
identifier PCI 77
Cell Cell D

PCI 96
Cell C

**PCI 1
Cell A**

PCI 45
Cell B

**PCI 1
Cell E**

Movement direction
Terminal device

FIG. 2A

Satellite 3

Satellite 2

Satellite 4

Satellite 1

Satellite 5

**PCI 1**
**Cell E**

Physical cell
identifier PCI 77
Cell Cell D

**Movement**
**direction**

**PCI 1**
**Cell A**

PCI 45
Cell B

PCI 96
Cell C

Terminal device

FIG. 2B

```
┌──────────┐                              ┌──────────┐
│ Terminal │                              │ Network  │
│  device  │                              │  device  │
└──────────┘                              └──────────┘
     │                                          │
     │    301a: First configuration information │
     │◄ ─ ─ ─ ─ ─ ─ ─ ─ ─ ─ ─ ─ ─ ─ ─ ─ ─ ─ ─ ─│
┌────┴─────────────────────────────────┐        │
│ 301: Measure a reference signal of a  │        │
│             first cell                │        │
└────┬─────────────────────────────────┘        │
     │          302: Measurement result          │
     │       corresponding to the first cell      │
     │       (including a first identifier of      │
     │              the first cell)                │
     │───────────────────────────────────────────►│
     │                                 ┌───────────┴──────────────────┐
     │                                 │ 303: Determine signal quality │
     │                                 │  of the first cell based on   │
     │                                 │  the measurement result       │
     │                                 │ corresponding to the first cell│
     │                                 └───────────┬──────────────────┘
     │                                          │
```

FIG. 3

```
┌──────────┐                              ┌──────────┐
│ Terminal │                              │ Network  │
│  device  │                              │  device  │
└──────────┘                              └──────────┘
     │               401a: Second                │
     │         configuration information         │
     │◄──────────────────────────────────────────│
┌────┴──────────────────────────────────┐        │
│ 401: Measure a reference signal of a   │        │
│            first cell                  │        │
└────┬──────────────────────────────────┘        │
     │          402: Measurement result          │
     │       corresponding to the first cell      │
     │      (including a physical cell identifier  │
     │       PCI of the first cell and position    │
     │     information of the terminal device)     │
     │───────────────────────────────────────────►│
     │                                 ┌───────────┴──────────────────┐
     │                                 │ 403: Determine signal quality │
     │                                 │  of the first cell based on   │
     │                                 │   the measurement result      │
     │                                 │ corresponding to the first cell│
     │                                 └───────────┬──────────────────┘
     │                                          │
```

FIG. 4

```
┌──────────┐                              ┌──────────┐
│ Terminal │                              │ Network  │
│  device  │                              │  device  │
└────┬─────┘                              └────┬─────┘
     │                          ┌──────────────┴──────────────┐
     │                          │ 501: Determine a target      │
     │                          │ cell from a first cell based │
     │                          │ on signal quality of the     │
     │                          │ first cell                   │
     │                          └──────────────┬──────────────┘
     │      502: First information              │
     │   (including a first identifier          │
     │◄──────of the target cell)────────────────│
┌────┴─────────────────────┐                    │
│ 503: Hand over from a    │                    │
│ serving cell to the      │                    │
│ target cell based on the │                    │
│ first information        │                    │
└────┬─────────────────────┘                    │
     │                                           │
```

FIG. 5

```
┌──────────┐                              ┌──────────┐
│ Terminal │                              │ Network  │
│  device  │                              │  device  │
└────┬─────┘                              └────┬─────┘
     │                     ┌──────────────────┴──────────────────┐
     │                     │ 601: Determine at least one          │
     │                     │ conditional handover CHO candidate   │
     │                     │ cell from a first cell based on      │
     │                     │ signal quality of a first cell       │
     │                     └──────────────────┬──────────────────┘
     │  602: Second information                │
     │ (including a first identifier of the at │
     │ least one CHO candidate cell and a      │
     │ handover condition corresponding to     │
     │◄─the at least one CHO candidate cell)───│
┌────┴──────────────────────┐                  │
│ 603: Determine a target   │                  │
│ CHO candidate cell from   │                  │
│ the at least one CHO      │                  │
│ candidate cell based on   │                  │
│ the second information    │                  │
└────┬──────────────────────┘                  │
┌────┴──────────────────────┐                  │
│ 604: Access the target    │                  │
│ CHO candidate cell        │                  │
└────┬──────────────────────┘                  │
     │                                          │
```

FIG. 6

Terminal
device

Network
device

701: Determine a target cell from a
first cell based on signal quality of
the first cell

702: Third information
(including a first identifier
of the target cell)

703: Reselect from a serving cell to
the target cell based on the third
information

FIG. 7

Communication apparatus 800

801

802

Processing
module

Transceiver
module

FIG. 8

Communication apparatus 900

901

902

Transceiver
module

Processing
module

FIG. 9

Communication apparatus 1000

1001

1002

Input/Output interface

Logic circuit

FIG. 10

Communication apparatus 1100

1101

1102

Input/Output interface

Logic circuit

FIG. 11

Antenna

Radio frequency circuit

1210

Memory

Processor

1220

Input/Output apparatus

FIG. 12

1301

Communication apparatus

Processor

Memory

Transceiver

1302

1303

FIG. 13

## INTERNATIONAL SEARCH REPORT

| | International application No. |
|---|---|
| | **PCT/CN2023/072587** |

**A.    CLASSIFICATION OF SUBJECT MATTER**

H04W24/10(2009.01)i;H04W36/30(2009.01)n

According to International Patent Classification (IPC) or to both national classification and IPC

**B.    FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXT, VEN, CNKI: 非地面网络, 非陆地网络, 标识, 测量, 结果, 小区, NTN, CGI, ID, measurement, result, cell

**C.    DOCUMENTS CONSIDERED TO BE RELEVANT**

| Category* | Citation of document, with indication, where appropriate, of the relevant passages | Relevant to claim No. |
|---|---|---|
| X | CN 113395717 A (DATANG MOBILE COMMUNICATIONS EQUIPMENT CO., LTD.) 14 September 2021 (2021-09-14) <br> description, paragraphs 0033-0106 and 0171-0230, and figures 1-2 | 1-5, 8-13, 16-20, 23-28, 31-35 |
| Y | CN 113395717 A (DATANG MOBILE COMMUNICATIONS EQUIPMENT CO., LTD.) 14 September 2021 (2021-09-14) <br> description, paragraphs 0033-0106 and 0171-0230, and figures 1-2 | 6-7, 14-15, 21-22, 29-30 |
| Y | CN 101983522 B (HUAWEI TECHNOLOGIES CO., LTD.) 17 April 2013 (2013-04-17) <br> description, paragraphs 0067-0076, and figures 6-9 | 6-7, 14-15, 21-22, 29-30 |
| A | CN 111565427 A (HUAWEI TECHNOLOGIES CO., LTD.) 21 August 2020 (2020-08-21) <br> entire document | 1-35 |
| A | CN 112771909 A (NOKIA SHANGHAI BELL CO., LTD. et al.) 07 May 2021 (2021-05-07) <br> entire document | 1-35 |
| A | US 2022007257 A1 (GUANGDONG OPPO MOBILE TELECOMMUNICATIONS CORP., LTD.) 06 January 2022 (2022-01-06) <br> entire document | 1-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 April 2023** | **28 April 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/072587**

| Patent document cited in search report | | | Publication date (day/month/year) | Patent family member(s) | | | Publication date (day/month/year) |
|---|---|---|---|---|---|---|---|
| CN | 113395717 | A | 14 September 2021 | | None | | |
| CN | 101983522 | B | 17 April 2013 | WO | 2010127506 | A1 | 11 November 2010 |
| | | | | CN | 101983522 | A | 02 March 2011 |
| CN | 111565427 | A | 21 August 2020 | | None | | |
| CN | 112771909 | A | 07 May 2021 | | None | | |
| US | 2022007257 | A1 | 06 January 2022 | WO | 2020147050 | A1 | 23 July 2020 |
| | | | | EP | 3902310 | A1 | 27 October 2021 |
| | | | | EP | 3902310 | A4 | 16 February 2022 |

Form PCT/ISA/210 (patent family annex) (July 2022)

**EP 4 451 733 A1**

### Patent documents cited in the description

- CN 202210080003